# EUROPEAN PATENT SPECIFICATION

(11) **EP 4 311 300 B1**
(45) Date of publication and mention of the grant of the patent: **30.09.2026**
(21) Application number: 22806256.8
(22) Date of filing: 28.02.2022
(51) Int. Cl.: H04L 69/04, H04L 69/28, H04W 28/06, H04W 28/02, H04L 69/321, H04L 69/324, H04L 47/28, H04L 69/325, H04W 80/02, H04L 47/32, H04W 80/00, H04L 47/41, H04L 69/22

(54) **DATA TRANSMISSION BASED ON A DISCARD TIMER**
DATENÜBERTRAGUNG EINES DATENSATZES AUF DER BASIS EINES ABWERFZEITGEBERS
TRANSMISSION DE DONNÉES D'UN ENSEMBLE DE DONNÉES BASÉE SUR UN TEMPORISATEUR DE REJET

(30) Priority: 10.05.2021 CN 202110507573
(43) Date of publication of application: 24.01.2024
(73) Proprietor: Huawei Technologies Co., Ltd., Longgang Shenzhen, Guangdong 518129 (CN)
(72) Inventor: LI, Jiaojiao, Shenzhen, Guangdong 518129 (CN); CHANG, Junren, Shenzhen, Guangdong 518129 (CN); LIU, Nannan, Shenzhen, Guangdong 518129 (CN)
(74) Representative: Pfenning, Meinig & Partner mbB
(86) International application number: PCT/CN2022/078395
(87) International publication number: WO 2022/237279

(56) References cited:
- CN-A- 102 137 439
- CN-A- 107 787 009
- CN-A- 109 219 078
- CN-A- 109 413 692
- CN-A- 111 181 688
- US-A1- 2003 218 554
- US-A1- 2016 286 426
- INTEL CORPORATION: "RLC UM segment discard operation in NR", vol. RAN WG2, no. Berlin, Germany; 20170821 - 20170825, 20 August 2017 (2017-08-20), XP051318630, Retrieved from the Internet <URL:http://www.3gpp.org/ftp/Meetings_3GPP_SYNC/RAN2/Docs/> [retrieved on 20170820]

## Description

### TECHNICAL FIELD

This application relates to the field of communication technologies, and in particular, to a data transmission method, a communication apparatus, and a computer-readable storage medium.

### BACKGROUND

With continuous development of wireless technologies, people have increasingly high requirements on a communication rate and a delay. As the rate increases and various applications emerge one after another, there are more and more small packets in a communication system. However, a memory and a processing delay of the communication system are usually closely related to a quantity of packets, and an increase in small packets poses a challenge to both the processing delay and the memory.

To reduce hardware processing difficulty and/or improve transmission performance, it is proposed in the industry that: when a terminal side device or a network side device serves as a transmitting side, after a corresponding service data unit (service data unit, SDU) is received at a service data adaptation protocol (service data adaptation protocol, SDAP) layer or a packet data convergence protocol (packet data convergence protocol, PDCP) layer, a packet concatenation function may be performed at a current protocol layer, to concatenate a plurality of SDUs into one concatenated packet, deliver and send the concatenated packet to a lower layer, and correspondingly, split the concatenated packet at a peer layer of a receiving side, and deliver the concatenated packet to an upper layer.

Because the packet concatenation function is not fully compatible, when the packet concatenation function is enabled at the PDCP layer or the SDAP layer and another function is also enabled, a new problem may be caused. For example, when a discard timer (discard timer) function for each PDCP SDU is enabled at the PDCP layer, different PDCP SDUs in the same concatenated packet are discarded at different moments, or when a robust header compression (RObust header compression, ROHC) function is enabled at the PDCP layer, a possibility of ROHC context out-of-synchronization between two communication parties for implementing header compression and/or decompression is increased. Further, a possibility of a data transmission failure between the two communication parties is increased.

Currently, there is no solution to a problem of an increased possibility of a data transmission failure between two communication parties caused by enabling a packet concatenation function.

US 2016/286426 A1 discloses a method which includes the steps of receiving a first data block from an upper layer, transferring a second data block including the first data block to a lower layer at a particular protocol layer, discarding the first and second data blocks present in the particular protocol layer if a certain period of time has passed, and transferring information associated with the discard of the second data block to the lower layer.

INTEL CORPORATION: "RLC UM segment discard operation in NR", 3GPP DRAFT; R2-1708826, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Berlin, Germany; 20170821 - 20170825 20 August 2017 (2017-08-20), XP051318630 discloses a timer-based discard mechanism for RLC SDU segments, where a discard timer is started when the first segment is received and can be stopped if reassembly is completed. If the timer expires, all associated segments are discarded.

### SUMMARY

The above mentioned problems are solved by the data transmission method, the communication apparatus, and the computer-readable storage medium according to the claims. Embodiments of this application provide the data transmission method and the data transmission apparatus, to facilitate solving a problem of an increased possibility of a data transmission failure between two communication parties caused by enabling a packet concatenation function.

The invention is set out in the appended set of claims. According to a first aspect, an embodiment of this application provides a data transmission method. The method may be implemented by a communication apparatus. The communication apparatus may be an entity having a signal transmission function and/or a signal receiving function, or may be a terminal device or a network device. This is not limited in this application. The method includes: obtaining a duration threshold of at least one first timer, where the at least one first timer is associated with a first data set, and the first data set includes a plurality of concatenated data units; and discarding the first data set based on the duration threshold of the at least one first timer when the at least one first timer expires.

Based on the foregoing solution, when both a packet concatenation function and a discard timer function are enabled, discarding is performed based on a granularity of a data set, and when at least one first timer associated with the first data set expires, the plurality of concatenated data units in the first data set are discarded, to avoid a problem of an increased possibility of a data transmission failure between two communication parties because different data units concatenated in the same data set are discarded at different moments.

It should be understood that this solution is applicable to any scenario in which both a packet concatenation function and a discard timer function are enabled, for example, in a scenario in which both a packet concatenation function and a discard timer function are enabled at a PDCP layer. This is not limited in this application. It may be understood that, in this application, that the at least one first timer is associated with a first data set may mean that the at least one first timer is associated with the first data set, or may mean that the at least one first timer is associated with at least one data unit included in the first data set.

For ease of understanding, a scenario in which both a packet concatenation function and a discard timer function are enabled at a PDCP layer is used as an example. A data unit may be a PDCP SDU that arrives at the PDCP layer, for example, a PDCP SDU 1, a PDCP SDU 2, a PDCP SDU 3, ..., and a PDCP SDU n, where n is an integer greater than 1. A PDCP entity may perform a packet concatenation function, to concatenate a plurality of PDCP SDUs into a complete packet, that is, a concatenated packet. The PDCP entity may use the concatenated packet as a whole, to perform corresponding PDCP processing such as ciphering and deciphering and/or integrity protection, obtain a PDCP PDU, and deliver and send the PDCP PDU to a lower layer. When performing the packet concatenation function, the PDCP entity may obtain a plurality of PDCP PDUs. One data set may include a plurality of PDCP SDUs concatenated in the same PDCP PDU, for example, a PDCP SDU 1, a PDCP SDU 2, and a PDCP SDU 3 in a concatenated packet 1; a PDCP SDU 4 and a PDCP SDU 5 in a concatenated packet 2; and a PDCP SDU 6 and a PDCP SDU 7 in a concatenated packet 3. In this application, the first data set may correspond to any concatenated packet, and the first data set may include a plurality of data units concatenated in the concatenated packet.

In a possible implementation, the communication apparatus may determine the at least one first timer and control a behavior of the at least one first timer, including a start behavior, a restart behavior, a stop behavior, a timeout behavior, and the like, so that when the at least one first timer expires, the plurality of concatenated data units in the first data set may be discarded.

### Details are described below.

The at least one first timer is associated with a first data set includes: the at least one first timer is a plurality of discard timers, and each of the plurality of discard timers is associated with each of the plurality of data units.
The discarding the first data set when the at least one first timer expires includes: when the plurality of discard timers do not expire, determining not to discard the first data set.

Based on the foregoing solution, the at least one first timer may be implemented as the plurality of discard timers, and each discard timer may be associated with one data unit in the plurality of data units and may be configured to perform timing on the data unit. Further, when the plurality of discard timers do not expire, the first data set is determined not to be discarded, and when all the plurality of discard timers expire, the plurality of concatenated data units in the first data set are discarded, to avoid a problem of an increased possibility of a data transmission failure between two communication parties because different data units concatenated in the same data set are discarded at different moments.

The at least one first timer is associated with a first data set includes: the at least one first timer is a discard timer associated with a first data unit, and the first data unit is a last data unit in the first data set; and the method further includes: when a second data unit in the first data set is received, stopping a discard timer associated with a data unit concatenated in the first data set before the second data unit.

Based on the foregoing solution, the plurality of concatenated data units in the first data set may be associated with one discard timer, and the at least one first timer may be implemented as one discard timer. When receiving the second data unit in the first data set, the communication apparatus may start a discard timer associated with the second data unit, stop (optionally) the discard timer associated with the data unit concatenated in the first data set before the second data unit, and discard the plurality of concatenated data units in the first data set until a discard timer associated with a last concatenated data unit expires. Therefore, there is no need to simultaneously maintain a discard timer for each data unit, thereby reducing system overheads.

That the at least one first timer is associated with a first data set includes: the at least one first timer is one discard timer; and the method further includes: stopping the concatenation of the first data set; and starting the discard timer. Optionally, the stopping the concatenation of the first data set includes: when a first condition is met, stopping the concatenation of the first data set, where the first condition includes at least one of the following: a concatenation timer of the first data set expires; a concatenation counter of the first data set reaches a count threshold; or a size of the first data set is greater than or equal to a specific threshold.

Based on the foregoing solution, the at least one first timer may be implemented as one discard timer associated with the first data set. The communication apparatus may determine, with reference to a concatenation behavior of the first data set, an occasion for starting the discard timer, and does not need to maintain a discard timer for each concatenated data unit. In this way, a delay of a packet concatenation function can be relatively fully considered while the plurality of concatenated data units in the first data set can be discarded.

That the at least one first timer is associated with a first data set includes: the at least one first timer is one discard timer; and the method further includes: when a third data unit in the first data set is received, starting or restarting the discard timer, where the third data unit is any data unit in the first data set.

Based on the foregoing solution, the at least one first timer may be implemented as one discard timer associated with the first data set. For the first data set, the communication apparatus may start or restart the discard timer when receiving each data unit to be concatenated, and discard the first data set when the discard timer expires. Therefore, there is no need to maintain a discard timer for each concatenated data unit, and a delay of a packet concatenation function may be relatively fully considered while the plurality of concatenated data units in the first data set can be discarded.

It should be understood that the foregoing describes only an example in which the communication apparatus controls the behavior of the at least one first timer to perform discarding at a granularity of a data set, instead of any limitation on this application. In actual application, a control policy may be further configured according to an application scenario, a service requirement, and the like, so that the communication apparatus may determine the at least one first timer and control the behavior of the first timer according to the configured control policy. Details are not described herein again.

In a possible implementation, the first data set is a first protocol layer data set, and the method further includes: indicating a second protocol layer to discard a second data set, where the second data set is a corresponding second protocol layer data set after the first data set is delivered to the second protocol layer, and the second protocol layer is a lower layer of the first protocol layer. For example, the first protocol layer may be a PDCP layer, and the second protocol layer may be an RLC layer.

It should be understood that, in this embodiment of this application, when retransmission of the first data set is triggered, a protocol layer entity of the first protocol layer may determine, when a data unit in the first data set needs to be discarded, that a packet (for example, a PDCP PDU) corresponding to a concatenated packet to which the data unit belongs has been delivered to a lower layer, for example, the RLC layer, and further indicate the lower layer to discard, for example, a corresponding PDCP PDU (RLC SDU). Alternatively, in all embodiments, when all data units (for example, PDCP SDUs) included in the concatenated packet are discarded, the first protocol layer entity indicates the second protocol layer to discard, for example, a corresponding RLC SDU.

In a possible implementation, when both a packet concatenation function and a discard timer function are enabled, a behavior of the discard timer associated with each data unit may not be changed, and the discard function is still performed by using the data unit as a granularity. That is, when receiving each data unit, the communication apparatus starts a discard timer associated with the data unit, and discards the data unit when the discard timer expires. The method further includes: re-concatenating a third data set, where the third data set includes a data unit that is not discarded in the second data set. A sequence number of the second data set is the same as a sequence number of the third data set.

That is, when concatenation preprocessing has been performed or a data set to which the data unit belongs needs to be retransmitted, concatenation or rebuilding may be performed again for another data unit that is not discarded in the data set, and a new concatenated packet is retransmitted to the receiving side. When the data unit needs to be discarded, if a PDU (for example, a PDCP PDU) corresponding to a concatenated packet to which the data unit belongs has been delivered to a lower layer, for example, an RLC layer, the lower layer further needs to be indicated to discard, for example, a corresponding PDCP PDU (RLC SDU).

In a possible implementation, that the transmitting side discards the data set or the data unit may be triggered by a status report from the receiving side. In this application, the status report from the receiving side may be used to indicate that the first data set is successfully received, or indicate that all the plurality of concatenated data units in the first data set are successfully received. Correspondingly, the transmitting side discards the first data set based on the status report. Alternatively, the status report from the receiving side may be used to indicate that the at least one concatenated data unit in the first data set is successfully received. Correspondingly, the transmitting side may discard the at least one data unit based on the status report, and when retransmission is required, perform concatenation again on another data unit in the data set to which the at least one data unit belongs, and perform retransmission.

Based on the foregoing solution, in a scenario in which the packet concatenation function is enabled, an effective solution to a new problem caused by introduction of the packet concatenation function is provided, to facilitate solving the problem of the increased possibility of the data transmission failure between two communication parties caused by enabling the packet concatenation function.

According to a second aspect, a data transmission method is provided. The method may be implemented by a first communication apparatus, and the first communication apparatus may be a terminal device or a network device. Optionally, the first communication apparatus may also be referred to as a compressor, and correspondingly, a second communication apparatus that performs data transmission with the first communication apparatus may also be referred to as a decompressor. The method includes: obtaining robust header compression ROHC configuration information; and separately performing, based on the ROHC configuration information, header compression on a plurality of data units concatenated in a first data set by using the same ROHC context.

Based on the foregoing solution, when both a packet concatenation function and a ROHC header compression technology are enabled, the compressor uses the same ROHC context to separately perform header compression on the plurality of data units concatenated in the first data set. This helps resolve a problem that after the packet concatenation function is enabled, a possibility of ROHC context out-of-synchronization between the decompressor and the compressor is increased due to loss of a possible concatenated packet, thereby greatly increasing a possibility of a failure in decompressing a subsequent concatenated packet.

During implementation, to ensure that the compressor can use the same ROHC context to separately perform header compression on the plurality of data units concatenated in the first data set, optionally, in a process in which the first communication apparatus uses the same ROHC context to separately perform header compression on the plurality of data units concatenated in the first data set, if one or more of the following conditions are met, it may be determined not to update the ROHC context: a ROHC feedback is received from the second communication apparatus, where the ROHC feedback is used to indicate that at least one second data set before the first data set is successfully decompressed or fails to be decompressed; a ROHC timer or a ROHC counter of the first communication apparatus meets a corresponding update condition; or a ROHC compression state of the first communication apparatus is switched.

Based on the foregoing solution, because a quantity of times/frequency of updating the ROHC context by the compressor in the concatenation process can be reduced, a possibility of a decompression failure caused by loss of a concatenated packet corresponding to the data set can be reduced.

Optionally, the method further includes updating the ROHC context before concatenation is performed on a plurality of data units in a third data set after the first data set.

Based on the foregoing solution, the ROHC context may be updated based on a granularity of a concatenated packet, and the same ROHC context is used for the plurality of data units in the same data set. If a first data unit included in a concatenated packet corresponding to the data set can be successfully decompressed, all SDUs in the concatenated packet can be successfully decompressed at the same time, so that a possibility of a decompression failure caused by loss of the concatenated packet corresponding to the data set can be reduced.

According to a third aspect, an embodiment of this application provides a data transmission method. The method may be implemented by a second communication apparatus, and the second communication apparatus may be a terminal device or a network device. Optionally, the second communication apparatus may also be referred to as a decompressor, and correspondingly, a first communication apparatus that performs data transmission with the second communication apparatus may also be referred to as a compressor. The method includes: decompressing a data unit in at least one data set from a first communication apparatus; and sending a ROHC feedback to the first communication apparatus, where the ROHC feedback indicates, based on the at least one data set, that decompression succeeds or fails. Optionally, that the ROHC feedback indicates, based on the at least one data set, that decompression succeeds includes: the ROHC feedback indicates that all data units in the at least one data set are successfully decompressed; and that the ROHC feedback indicates, based on the at least one data set, that decompression fails includes: the ROHC feedback indicates that at least one data unit in the at least one data set fails to be decompressed. It may be understood that, in this application, that the ROHC feedback indicates that at least one data unit in the at least one data set fails to be decompressed includes that all data units in the at least one data set fail to be decompressed.

Based on the foregoing solution, when the packet concatenation function and the ROHC header compression technology are enabled, the decompressor decompresses the data unit in the data set from the compressor, and performs ROHC feedback based on the granularity of the data set, thereby avoiding a decompression failure caused by severe out-of-synchronization between the ROHC context of the decompressor and the ROHC context of the compressor when packet loss occurs in the concatenated packet.

According to a fourth aspect, an embodiment of this application provides a communication apparatus, including: an information obtaining unit, configured to obtain a duration threshold of at least one first timer, where the at least one first timer is associated with a first data set, and the first data set includes a plurality of concatenated data units; and a processing unit, configured to discard the first data set based on the duration threshold of the at least one first timer when the at least one first timer expires.

The at least one first timer is associated with a first data set includes: the at least one first timer is a plurality of discard timers, and each of the plurality of discard timers is associated with each of the plurality of data units; and the processing unit is configured to: when the plurality of discard timers do not expire, determine not to discard the first data set.

The at least one first timer is a discard timer associated with a first data unit, and the first data unit is a last data unit in the first data set.

The processing unit is further configured to: when a second data unit in the first data set is received, stop a discard timer associated with a data unit concatenated in the first data set before the second data unit.

That the at least one first timer is associated with a first data set includes: the at least one first timer is one discard timer; and the processing unit is further configured to: stop the concatenation of the first data set; and start the discard timer.

The processing unit is configured to: when a first condition is met, stop the concatenation of the first data set, where the first condition includes at least one of the following: a concatenation timer of the first data set expires; a concatenation counter of the first data set reaches a count threshold; or a size of the first data set is greater than or equal to a specific threshold.

In a possible implementation, that the at least one first timer is associated with a first data set includes: the at least one first timer is one discard timer; and the processing unit is further configured to: when a third data unit in the first data set is received, start or restart the discard timer, where the third data unit is any data unit in the first data set.

According to a fifth aspect, an embodiment of this application further provides a communication apparatus, including: an information obtaining unit, configured to obtain robust header compression ROHC configuration information; and a processing unit, configured to separately perform, based on the ROHC configuration information, header compression on a plurality of data units concatenated in the first data set by using the same ROHC context.

In a possible implementation, in a process of separately performing header compression on the plurality of data units concatenated in the first data set by using the same ROHC context, the processing unit determines not to update the ROHC context if one or more of the following conditions are met: a ROHC feedback is received from a second communication apparatus, where the ROHC feedback is used to indicate that at least one second data set before the first data set is successfully decompressed or fails to be decompressed; a ROHC timer or a ROHC counter meets a corresponding update condition; or a ROHC compression state is switched.

In a possible implementation, the processing unit is further configured to update the ROHC context before concatenation is performed on a plurality of data units in a third data set after the first data set.

According to a sixth aspect, an embodiment of this application further provides a communication apparatus, including: a decompression unit, configured to decompress a data unit in at least one data set from a first communication apparatus; and a communication unit, configured to send a ROHC feedback to the first communication apparatus, where the ROHC feedback indicates, based on the at least one data set, that decompression succeeds or fails.

In a possible implementation, that the ROHC feedback indicates, based on the at least one data set, that decompression succeeds includes: the ROHC feedback indicates that all data units in the at least one data set are successfully decompressed; and that the ROHC feedback indicates, based on the at least one data set, that decompression fails includes: the ROHC feedback indicates that at least one data unit in the at least one data set fails to be decompressed.

According to a seventh aspect, an embodiment of this application further provides a communication apparatus, including a processor, where the processor is coupled to a memory; and the memory, configured to store a computer program. The processor is configured to execute the computer program stored in the memory, so that the communication apparatus is enabled to perform the method according to any one of the first aspect.

According to an eighth aspect, an embodiment of this application further provides a communication apparatus, including a processor, where the processor is coupled to a memory; and the memory, configured to store a computer program. The processor is configured to execute the computer program stored in the memory, so that the communication apparatus is enabled to perform the method according to any one of the second aspect.

According to a ninth aspect, an embodiment of this application further provides a communication apparatus, including a processor, where the processor is coupled to a memory; and the memory, configured to store a computer program. The processor is configured to execute the computer program stored in the memory, so that the communication apparatus is enabled to perform the method according to any one of the third aspect.

According to a tenth aspect, an embodiment of this application provides a computer-readable medium, configured to store a computer program. The computer program includes instructions used to perform the method according to any one of the optional implementations of the first aspect, the second aspect, or the third aspect.

In this application, based on the implementations provided in the foregoing aspects, the implementations may be further combined to provide more implementations.

### BRIEF DESCRIPTION OF DRAWINGS

FIG. 1a, FIG. 1b, and FIG. 1c are schematic diagrams of a communication system to which an embodiment of this application is applicable;
FIG. 2 is a schematic diagram of a structure of a protocol stack in a 5G system according to an embodiment of this application;
FIG. 3 is a schematic diagram of functions of a PDCP layer in a 5G system according to an embodiment of this application;
FIG. 4 is a schematic diagram of a frame format delivered to a PHY layer according to an embodiment of this application;
FIG. 5a is a schematic diagram of a corresponding frame format after a packet concatenation function is performed at an SDAP layer;
FIG. 5b is a schematic diagram of a corresponding frame format after a packet concatenation function is performed at a PDCP layer;
FIG. 6 is a schematic flowchart of enabling both a packet concatenation function and a discard timer function at a PDCP layer;
FIG. 7 is a schematic flowchart of enabling a ROHC function at a PDCP layer;
FIG. 8 is a schematic flowchart of enabling both a packet concatenation function and a ROHC function at a PDCP layer;
FIG. 9 is a schematic flowchart of a data transmission method according to an embodiment of this application;
FIG. 10a to FIG. 10d are schematic flowcharts of a data transmission method according to an embodiment of this application;
FIG. 11 is a schematic flowchart of a data transmission method according to an embodiment of this application;
FIG. 12a is a schematic diagram of compression state switching of a decompressor;
FIG. 12b is a schematic diagram of compression state switching of a compressor;
FIG. 13 is a schematic flowchart of a data transmission method according to an embodiment of this application;
FIG. 14 is a schematic flowchart of a data transmission method according to an embodiment of this application;
FIG. 15 is a schematic diagram of a structure of a communication apparatus according to an embodiment of this application;
FIG. 16 is a schematic diagram of a structure of a communication apparatus according to an embodiment of this application; and
FIG. 17 is a schematic diagram of a structure of a communication apparatus according to an embodiment of this application.

### DESCRIPTION OF EMBODIMENTS

The following clearly and completely describes embodiments of this application with reference to accompanying drawings.

To better understand a data transmission method disclosed in embodiments of this application, a communication system to which embodiments of this application are applicable is first described.

The technical solutions in embodiments of this application may be applied to various communication systems, for example, a global system for mobile communications, a long term evolution (Long Term Evolution, LTE) frequency division duplex system, an LTE time division duplex system, a universal mobile telecommunications system, a 5th generation (5th-Generation, 5G) mobile communication technology system, and the like. With continuous development of communication technologies, the technical solutions in embodiments of this application may be further applied to a subsequent evolved communication system, for example, a 6th generation (6th-Generation, 6G) mobile communication technology system. Alternatively, the communication system may be a hybrid architecture of a plurality of communication systems, for example, a hybrid architecture of LTE and 5G.

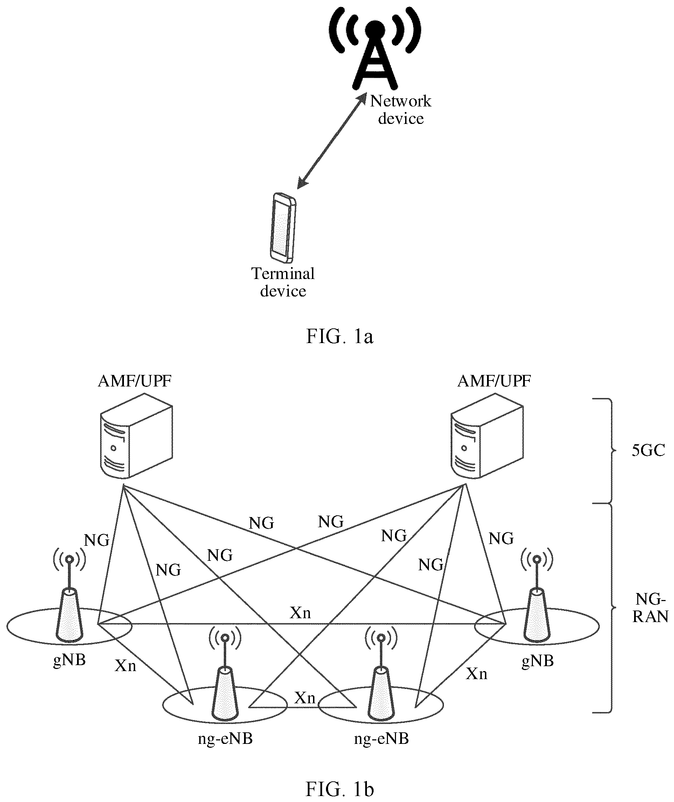

FIG. 1a is a schematic diagram of a structure of a communication system to which an embodiment of this application is applicable. Refer to FIG. 1a. The communication system may include at least two communication apparatuses, for example, one network device and one terminal device. It should be understood that a quantity and a form of devices shown in FIG. 1a are used as an example and do not constitute a limitation on this embodiment of this application. In actual application, two or more network devices and two or more terminal devices may be included. The communication system shown in FIG. 1a is described by using an example in which there is one network device and one terminal device, and the network device can provide a service for the terminal device. In FIG. 1a, for example, the network device is a base station and the terminal device is a mobile phone.

The following describes an example of a 5G system architecture. As shown in FIG. 1b, the 5G system architecture includes a 5G core (5th generation core, 5GC) network and a 5G radio access network (5th-Generation wireless access network, NG-RAN), and network communication may be performed between the 5G radio access network and the 5G core network. Nodes in the NG-RAN include a gNB and an ng-eNB. The gNB is a termination point that provides user plane and control plane protocols of a new radio (New Radio, NR) system, and the ng-eNB is a termination point that provides user plane and control plane protocol stacks of an E-UTRAN. In addition, an Xn interface is used for connection between the gNB and the gNB, between the gNB and the ng-eNB, or between the ng-eNB and the ng-eNB; and an NG interface is used for connection between the gNB and the ng-eNB and the 5GC. Specifically, the gNB and the ng-eNB are connected to an access and mobility management function (access and mobility management function, AMF) module through an NG-C interface, and the gNB and the ng-eNB are connected to a user plane function (user plane function, UPF) module through an NG-U interface.

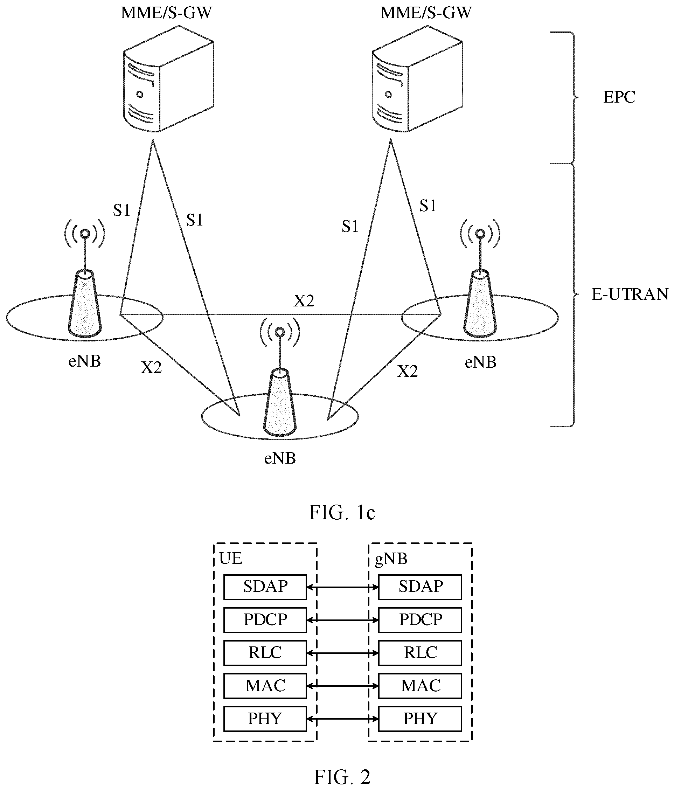

The following describes an example of an LTE system architecture. As shown in FIG. 1c, the LTE system includes an evolved packet core (evolved packet core, EPC) network and an evolved UMTS terrestrial radio access network (Evolved UMTS Terrestrial Radio Access Network, E-UTRAN), and network communication may be performed between the EPC and the E-UTRAN. Nodes in the EPC include a mobility management entity (mobility management entity, MME) and a serving gateway (serving gateway, S-GW). Nodes in the E-UTRAN include an evolved NodeB (evolved NodeB, eNB). An X2 interface is used for communication between eNBs, and an S1 interface is used for connection between the eNB and the MME/S-GW.

In this embodiment of this application, the network device may be a device having a wireless transceiver function or a chip that may be disposed in the device. The network device includes but is not limited to an evolved NodeB (evolved NodeB, eNB), a radio network controller (radio network controller, RNC), a NodeB (NodeB, NB), a network device controller (base station controller, BSC), a network device transceiver station (base transceiver station, BTS), a home network device (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission and reception point, TRP, or transmission point, TP), or the like; may be a device used in a 4G, 5G, or even 6G system, for example, a gNB in an NR system, a transmission point (TRP or TP), or one or a group of antenna panels (including a plurality of antenna panels) of a network device in a 4G system; or may be a network node that forms a gNB or a transmission point, for example, a baseband unit (BBU), or a distributed unit (distributed unit, DU), a picocell (Picocell), a femtocell (Femtocell), or a roadside unit (roadside unit, RSU) in an intelligent driving scenario.

In some deployments, the gNB may include a central unit (central unit, CU) and a distributed unit (distributed unit, DU). The gNB may further include an active antenna unit (active antenna unit, AAU). The CU performs some functions of the gNB, and the DU performs some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer eventually becomes information at the PHY layer, or is converted from information at the PHY layer. Therefore, in this architecture, higher-layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

In this embodiment of this application, the terminal device may include but is not limited to user equipment (user equipment, UE), an access terminal device, a subscriber unit, a subscriber station, a mobile station, a mobile console, a remote station, a remote terminal device, a mobile device, a user terminal device, a user agent, a user apparatus, or the like. For another example, the terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wireless terminal or an RSU in a wireless terminal type in V2X vehicle to everything, or the like.

It may be understood that, when there are at least two communication apparatuses in the communication system, for ease of differentiation, the at least two communication apparatuses may be referred to as a first communication apparatus, a second communication apparatus, or the like, or may be referred to as a first apparatus, a second apparatus, or the like for short. During specific implementation, the first communication apparatus may be a terminal device, and the second communication apparatus may be a network device. Alternatively, the first communication apparatus may be a network device, and the second communication apparatus may be a terminal device. Alternatively, both the first communication apparatus and the second communication apparatus are terminal devices or network devices. This is not limited in this application.

In this embodiment of this application, the transmitting side may be either of the foregoing terminal device and the foregoing network device. Correspondingly, when the transmitting side is a terminal device, the receiving side may be a network device; or when the transmitting side is a network device, the receiving side may be a terminal device. The compressor may be either of the foregoing terminal device and the foregoing network device. Correspondingly, when the compressor is a terminal device, the decompressor may be a network device; or when the compressor is a network device, the decompressor may be a terminal device.

For ease of understanding and description, the following describes this application by using a 5G system as an example. It should be noted that, (1) in embodiments disclosed in this application, a scenario of a 5G network in a wireless communication network is used as an example for description. It should be noted that the solutions in embodiments disclosed in this application may be further applied to another wireless communication network, and a corresponding name may also be replaced with a name of a corresponding function in the another wireless communication network. (2) Aspects, embodiments, or features of this application are presented in embodiments disclosed in this application by describing a system that includes a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

At each protocol layer, a protocol layer entity may perform processing such as adding a corresponding header (or frame header) of a packet (that is, an SDU at a current layer, or referred to as an upper-layer PDU) transferred by an upper layer, to obtain a PDU at the current protocol layer, and a peer layer of a peer device may remove and parse a header of a packet of the PDU. For example, a data link layer of the transmitting side adds a data link layer header to a packet, and a data link layer of the receiving side needs to perform packet header parsing and packet header removal on a received data link layer PDU, to obtain a data link layer SDU, and deliver the obtained data link layer SDU to an upper layer.

Refer to FIG. 2. A protocol stack architecture of a 5G system may include an SDAP layer, a PDCP layer, a radio link control (radio link control, RLC) layer, and a media access control (media access control, MAC) layer.

The transmitting side may separately process internet protocol (internet protocol, IP) packets according to a sequence of SDAP->PDCP->RLC->MAC->PHY, and finally deliver the packets to the PHY layer for sending. In the 5G system, for example, the transmitting side is UE and the receiving side is a gNB. When an IP packet arrives at the SDAP layer of the UE, an SDAP entity located at the SDAP layer uses the IP packet as an SDAP SDU, performs function processing of the SDAP layer, adds an SDAP header to the IP packet to form an SDAP PDU, and then delivers the SDAP PDU to the PDCP layer. A PDCP entity located at the PDCP layer uses the SDAP PDU as a PDCP SDU, performs function processing of the PDCP layer, and adds a PDCP header to form the PDCP PDU. The PDCP PDU is sequentially delivered to the RLC layer and the MAC layer. Similarly, the RLC layer and the MAC layer separately perform protocol stack processing, add an RLC header and a MAC header, and finally deliver the PDCP PDU to the PHY layer for sending. Correspondingly, each peer layer of the gNB sequentially parses the received packet and delivers the packet to an upper layer.

It may be understood that during specific implementation, any protocol layer may include at least one entity, for implementing some or all functions of the current protocol layer. This is not limited in this application. The PDCP is used as an example. PDCP entities are located at the PDCP layer, and each PDCP entity may carry data of one radio bearer (radio bearer, RB). For example, a signalling radio bearer (signalling radio bearer, SRB) for transmitting signaling data and a data radio bearer (data radio bearer, DRB) for transmitting service data may be included. Generally, a function entity set of the same radio bearer includes one PDCP entity, at least one RLC entity corresponding to the PDCP entity, at least one MAC entity corresponding to the at least one RLC entity, and at least one PHY entity corresponding to the at least one MAC entity.

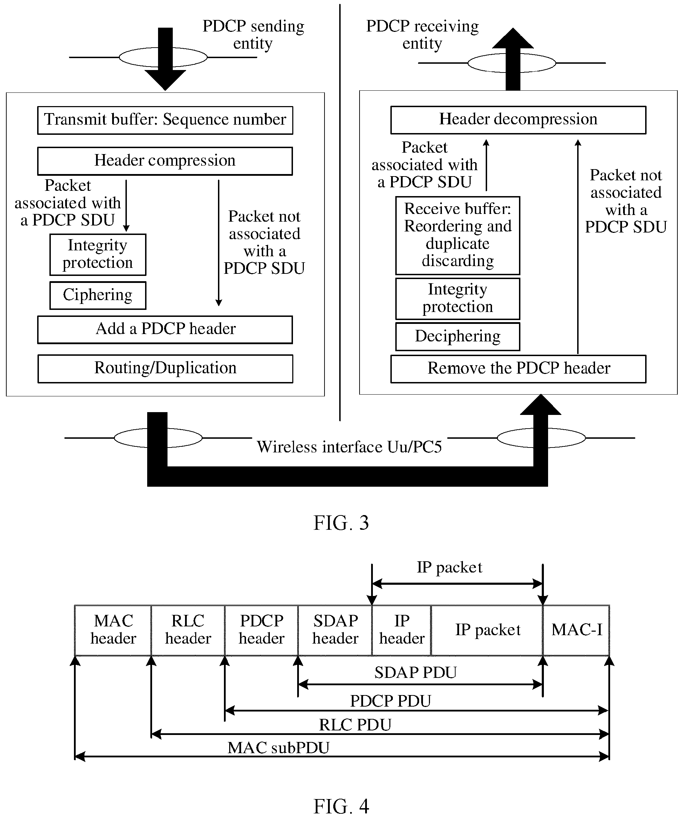

At any protocol layer, a corresponding entity or functional module located at the current protocol layer may perform a plurality of types of function processing on an IP packet delivered by an upper layer. The PDCP entity is used as an example. Refer to FIG. 3, the PDCP entity may include a PDCP sending entity and a PDCP receiving entity. The PDCP sending entity or the PDCP receiving entity may further include a plurality of functional modules, configured to implement the following function processing of the PDCP layer.
(1) Receive a PDCP SDU from an upper layer for data transmission (user plane or control plane).
(2) Maintain a PDCP sequence number (sequence number, SN).
(3) Perform header compression (header compression) and header decompression (header decompression) by using a robust header compression (RObust header compression, ROHC) protocol or an ethernet header compression (ethernet header compression, EHC) protocol.
(4) Security functions:
   1. Ciphering (ciphering) and deciphering (deciphering) of user plane and control plane protocols; and
   2. Integrity protection (integrity protection) and integrity verification (integrity verification).
(5) Timer-based SDU discarding.
(6) Routing (routing) for split bearers.
(7) Duplication (duplication).
(8) Reordering (reordering) and delivery by order.
(9) Out-of-order delivery.
(10) Duplicate discarding (duplicate discarding).

Other function processing supported by the protocol layer is not described herein again.

For example, after layer-by-layer processing is performed on the IP packet, a frame format finally delivered to the PHY layer is shown in FIG. 4, including a MAC header, an RLC header, a PDCP header, an SDAP header, an IP packet, and a MAC-I. The MAC header, the RLC header, the PDCP header, and the SDAP header include indication fields and the like that are required by each layer of the receiving side to process the packet, and may be collectively referred to as a layer 2 (L2) packet header (header); and the MAC-I field is an integrity verification code generated by performing an integrity protection function at the PDCP layer.

It can be learned from FIG. 2 to FIG. 4 that each IP packet needs to undergo a plurality of times of header processing and protocol layer function processing. During implementation, in one aspect, when a data transmission rate is relatively high, a requirement on packet assembly performance of the UE and the gNB is relatively high. In another aspect, ciphering and deciphering and/or integrity protection function and the like need to be performed on each IP packet at the PDCP layer. Especially for data of small packets, security processing occupies a relatively large proportion in performance such as a delay, and transmission performance is reduced.

Therefore, a packet concatenation function is proposed in the industry. A transmitting side may deliver, by using the packet concatenation function, a complete packet (which may also be referred to as a concatenated packet) obtained after concatenation is performed on a plurality of IP packets at an SDAP layer or a PDCP layer, and send the packet to a lower layer. Correspondingly, concatenation splitting (which may also be referred to as de-concatenation or concatenation removal) is performed at a peer layer of a receiving side, and the packet is delivered to an upper layer. This can reduce L2 packet header processing, thereby improving packet assembly performance, and reducing hardware processing difficulty. In addition, security processing (including ciphering and deciphering and/or integrity protection) is performed only once on the concatenated packet as a whole, to greatly reduce a processing delay and improve transmission performance. It should be noted that "concatenation (concatenation)" of the packets is merely a possible name of the function, and may alternatively be another name of a function of concatenating a plurality of IP packets into one packet for processing or transmission. The "concatenation splitting" function is similar to this function. This is not limited in this application.

During implementation, a protocol layer entity may perform a packet concatenation function based on a concatenation timer or a concatenation counter. Details are described below.
(1) Concatenation based on a concatenation timer: A concatenation function is performed on SDUs that arrive at an SDAP layer or a PDCP layer (or a concatenation functional module) within a specific time, and the SDUs are concatenated into the same packet. The concatenation timer is a timer used to count the specific time when the concatenation function is performed.
(2) Concatenation based on a concatenation counter: A concatenation function is performed on every N adjacent SDUs that arrive at an SDAP layer or a PDCP layer (or a concatenation functional module), and the SDUs are concatenated into the same packet, where N is an integer greater than or equal to 1. The concatenation counter is a counter used to count a quantity of concatenated SDUs when the concatenation function is performed.

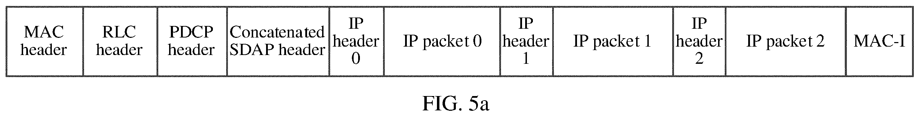

If the concatenation function is performed at the SDAP layer, a frame format of a packet (for example, a MAC subPDU) finally delivered to the physical layer may be shown in FIG. 5a, including a MAC header, an RLC header, a PDCP header, a concatenated SDAP header, an IP header 0, an IP packet 0, an IP header 1, an IP packet 1, an IP header 2, an IP packet 2, ..., and a MAC-I. The concatenated SDAP header may include a field used to indicate a quantity of concatenated IP packets, to indicate the receiving side to correctly perform a concatenation splitting function.

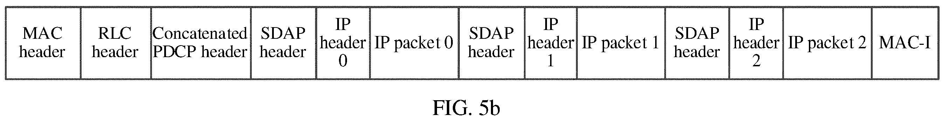

If the concatenation function is performed at the PDCP layer, a frame format of a packet (for example, a MAC subPDU) finally delivered to the physical layer may be shown in FIG. 5b, including a MAC header, an RLC header, a concatenated PDCP header, an SDAP header, an IP header 0, an IP packet 0, an SDAP header, an IP header 1, an IP packet 1, an SDAP header, an IP header 2, an IP packet 2, ..., and a MAC-I. Similarly, the concatenated PDCP header may include a field used to indicate a quantity of concatenated IP packets, to indicate the receiving side to correctly perform a concatenation splitting function.

Implementation of the packet concatenation function can reduce hardware processing difficulty and/or improve transmission performance to some extent. However, because the foregoing packet concatenation function is not compatible, when the packet concatenation function is enabled at the PDCP layer or the SDAP layer and another function is also enabled, a new problem may be caused.

For example, (1) discard timer (discard Timer) function.

At the existing PDCP layer, for each DRB, when each PDCP SDU arrives at the PDCP entity of the transmitting side, the PDCP entity starts a discard timer associated with the PDCP SDU. When the discard timer expires, the PDCP entity of the transmitting side discards the PDCP SDU associated with the discard timer, to prevent congestion in a transmit buffer. If the PDCP PDU has been delivered to the RLC layer, the PDCP entity further indicates the RLC entity at the RLC layer to discard the corresponding PDCP PDU. Duration of the discard timer may be configured by a radio resource control (radio resource control, RRC) layer, and duration of a discard timer is configured for each PDCP entity (or each RB).

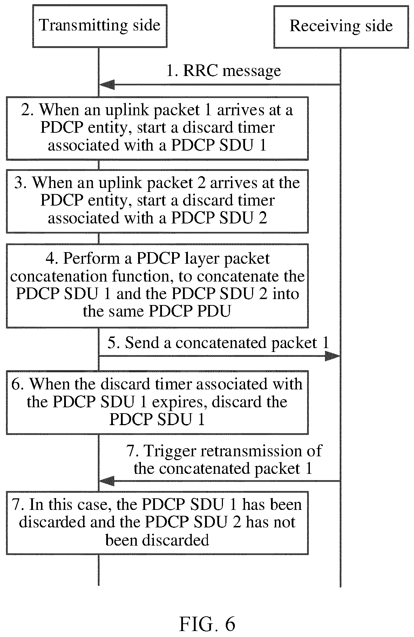

Refer to FIG. 6. If both a packet concatenation function and the foregoing discard timer function are enabled at a PDCP layer, uplink data transmission from the UE to the gNB is used as an example. As a transmitting side, the UE concatenates a PDCP SDU 1 and a PDCP SDU 2 in the same PDCP PDU, and sends a concatenated packet 1. When a discard processing operation is still performed on each PDCP SDU according to the foregoing discard timer operation, when a discard timer associated with the PDCP SDU 1 expires, the PDCP SDU 1 is discarded, but the PDCP SDU 2 is not discarded. Consequently, different SDUs included in the same concatenated packet are discarded at different moments.

In an RLC acknowledged mode (acknowledged mode, AM), when a process such as PDCP re-building occurs on the PDCP entity, PDCP SDU retransmission needs to be performed. In this case, PDCP SDUs that are previously concatenated in the same PDCP PDU should still be concatenated in a PDCP PDU for retransmission, to ensure normal work of a reordering function and the like at a receiving side. However, according to an existing solution, if retransmission of the concatenated packet 1 is triggered (for example, the gNB on the receiving side triggers retransmission to the transmitting side), because the PDCP SDU 1 has been discarded and the PDCP SDU 2 is not discarded in this case, a concatenation error occurs when the PDCP entity on the transmitting side retransmits the packet 1. Consequently, normal work of a reordering function and the like on the receiving side cannot be ensured.

For another example, (2) robust header compression (RObust header compression, ROHC) function.

The ROHC is a technology that uses redundant information in different IP packet headers to compress headers.

The compressor (for example, a transmitting side) and the decompressor (for example, a receiving side) store redundant information in ROHC contexts of the compressor and the decompressor respectively, and maintain compression context synchronization between the receiving side and the transmitting side, so that a compressed part can be recovered without any loss at the decompressor (the receiving side).

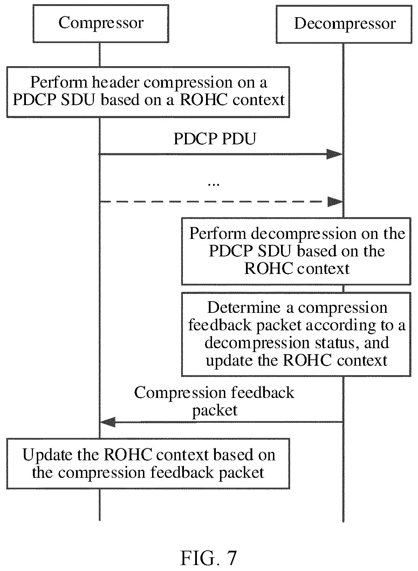

In the conventional technology, in a process of maintaining ROHC contexts of a receiving side and a transmitting side, referring to FIG. 7, after performing header compression on a PDCP SDU according to a locally maintained compression context, a compressor delivers a corresponding PDCP PDU to a lower layer, and sends the PDCP PDU to a decompressor. A peer layer of the decompressor decompresses the received PDCP SDU according to the locally maintained ROHC context, and the decompressor may determine a compression feedback packet according to a decompression status, and update the locally maintained ROHC context. In addition, the decompressor sends the compression feedback packet to the compressor, and the compressor updates the locally maintained ROHC context based on the compression feedback packet from the decompressor, and selects different compression states, such as an IR state, an FO state, or an SO state.

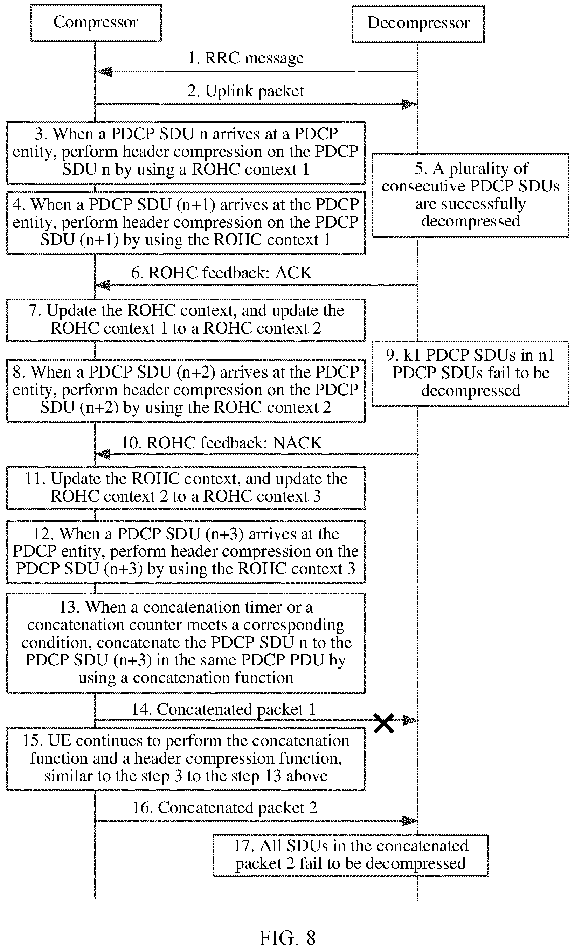

Refer to FIG. 8. If both a packet concatenation function and the foregoing ROHC function are enabled at a PDCP layer, when each PDCP SDU arrives at a PDCP entity, the PDCP entity performs header compression on redundant information in an IP header in an IP packet, and concatenates a plurality of IP packets into the same PDCP PDU, to send a concatenated packet to a decompressor. In addition, the decompressor performs decompression based on the received uplink data and sends ROHC feedback information to a compressor over a ROHC feedback channel based on a success or failure of the decompression on the PDCP SDU. The feedback information may include ACK, NACK, and STATIC-NACK states. The compressor adjusts a compression state of the compressor based on a ROHC feedback packet from a receiving side and/or a concatenation timer/concatenation counter, updates a ROHC context, and performs header compression on subsequent PDCP SDUs in the concatenated packet based on the updated ROHC context. It should be understood that there is no sequence between the packet concatenation function and the ROHC function. The PDCP entity may first perform the packet concatenation function, or may first perform the ROHC function, or may simultaneously perform the packet concatenation function and the ROHC function. This is not limited in this application.

A ROHC mechanism has specific anti-packet-loss performance. In other words, if one or a few PDCP SDUs are lost, the decompressor can still successfully decompress a subsequent PDCP SDU. However, if a large quantity of PDCP SDUs are continuously lost, the ROHC context maintained by the decompressor is out of synchronization with the ROHC context maintained by the compressor, causing a failure in decompressing the subsequent PDCP SDU.

When both the PDCP packet concatenation function and the ROHC function are enabled, especially in RLC unacknowledged mode (Unacknowledged mode, UM), a plurality of SDUs are concatenated in the same PDU for transmission. If one concatenated packet is lost, it is equivalent to that a plurality of PDCP SDUs are lost. For the decompressor, a possibility that the ROHC context of the decompressor is out of synchronization with the ROHC context of the compressor is increased, thereby greatly increasing a possibility of a decompression failure of a subsequent packet.

Embodiments of this application provide a data transmission method and apparatus. A solution in which a discarding function and/or a ROHC function are/is performed based on a granularity of a data set is provided, so that when a packet concatenation function is enabled at a related protocol layer and another function is also enabled, a problem such as inconsistent discarding moments of a plurality of concatenated data units in the same data set, and/or an increase in a possibility of ROHC context out-of-synchronization of two communication parties for implementing a header compression and/or decompression function is avoided as much as possible. Further, a possibility of a data transmission failure between two communication parties caused by enabling of the packet concatenation function is reduced.

It should be understood that the terms "system" and "network" may be used interchangeably in embodiments of this application. "At least one" means one or more, and "a plurality of" means two or more. "And/Or" is an association relationship for describing associated objects, and indicates that three relationships may exist. For example, A and/or B may indicate the following cases: Only A exists, both A and B exist, and only B exists, where A and B may be in a singular form or a plural form. The character "/" generally indicates an "or" relationship between the associated objects. At least one of the following items (pieces) or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural. In addition, unless otherwise stated, ordinal numbers such as "first" and "second" in embodiments of this application are for distinguishing between a plurality of objects, but are not intended to limit an order, a time sequence, priorities, or importance of the plurality of objects.

For ease of understanding, the following describes this application in detail with reference to the accompanying drawings and embodiments.

Case 1: Both a packet concatenation function and a discard timer function are enabled.

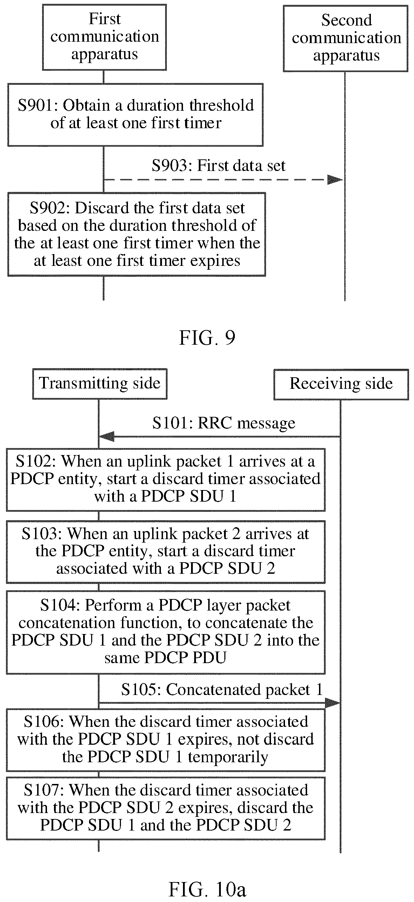

FIG. 9 is a schematic flowchart of a data transmission method according to an embodiment of this application. The data transmission method may be implemented by a communication apparatus. The communication apparatus may be the terminal device or the network device in FIG. 1a, FIG. 1b, or FIG. 1c. The terminal device or the network device may be used as a transmitting side to perform the data transmission method shown in FIG. 9, and implement data transmission with a corresponding network device or terminal device that is used as a receiving side. For ease of description, the following uses an example in which the first communication apparatus implements the data transmission method for description.

Refer to FIG. 9. The data transmission method may include the following steps.

S901: A first communication apparatus obtains a duration threshold of at least one first timer.

In this application, the first communication apparatus may be a terminal device or a network device.

In this application, the at least one first timer may be associated with a first data set, and the first data set may include a plurality of concatenated data units. It may be understood that, in this application, that the at least one first timer may be associated with a first data set may be that the at least one first timer is associated with the first data set as a whole, or that the at least one first timer is associated with a data unit in the first data set, where the at least one first timer may be associated with one data unit or two or more data units. This is not limited in this application. For example, one data unit may be one packet, for example, an SDU. One data set may include a plurality of concatenated data units. Specifically, one data set may be a set of the plurality of concatenated data units; or one data set may be a packet obtained after the plurality of data units are concatenated, for example, a concatenated packet. Alternatively, one data set may be a packet obtained after the plurality of data units are concatenated and processing of a related function of a current protocol layer is completed, for example, a PDU. A specific implementation of one data set is not limited in this application.

It should be noted that, in different embodiments of this application, the at least one first timer may be one timer associated with the first data set, or may be two or more timers associated with the first data set. This is not limited in this application. According to a specific case, duration thresholds of different first timers in the at least one first timer may be the same or may be different. A duration threshold of any first timer may be configured according to experience, or may be configured according to an application scenario or a service requirement.

It should be understood that, in this application, related configuration information of the at least one first timer includes a discarding rule (that is, a specific first timer or specific first timers in the at least one first timer), the duration threshold of the at least one first timer, and the like, and may be configured by a user who uses or configures the first communication apparatus. Alternatively, in another example, the related configuration information of the at least one first timer may be delivered by another communication apparatus. For example, when the first communication apparatus is UE, a second communication apparatus gNB delivers the related configuration information to the UE. Alternatively, in another example, the related configuration information of the at least one first timer may be stored in the first communication apparatus. After the two communication parties agree on a related rule, the first communication apparatus determines corresponding configuration information according to the related rule agreed on by the two communication parties. A specific implementation of the configuration manner is not limited in this application.

Optionally, S903: The first communication apparatus sends the first data set to a second communication apparatus, and correspondingly, the second communication apparatus receives the first data set from the first communication apparatus.

S902: The first communication apparatus discards the first data set based on the duration threshold of the at least one first timer when the at least one first timer expires.

In this application, when the at least one first timer is started and reaches the duration threshold of the at least one first timer, the first communication apparatus may determine that the at least one first timer expires. In this case, the first communication apparatus discards the first data set. It may be understood that, in this application, because the first data set may be implemented in different manners, or the packet corresponding to the first data set may have been delivered to a lower layer, when the first communication apparatus discards the first data set, the first communication apparatus may discard the plurality of concatenated data units in the first data set, or may discard the packet corresponding to the first data set. It should be understood that, in this application, the first communication apparatus may discard the plurality of concatenated data units in the first data set at the same moment or different moments. This is not limited in this application, and is not distinguished one by one in the following.

For ease of understanding, the following describes this embodiment of this application with reference to FIG. 10a to FIG. 10d by using an example in which UE is a first communication apparatus and is a transmitting side, a gNB is a second communication apparatus and is a receiving side, and the first communication apparatus enables both a packet concatenation function and a discard timer function at a PDCP layer. It should be understood that the following describes this application by using an example in which two SDUs are used as two data units. This application is also applicable to a scenario in which a packet concatenation function is performed on another quantity (for example, one, three, or more) of data units. Details are not distinguished and described one by one in the following.

Embodiment 1: That the at least one first timer is associated with a first data set includes: the at least one first timer is a plurality of discard timers, and each of the plurality of discard timers is associated with each of the plurality of data units. In S902, when the at least one first timer expires, that the first data set is discarded includes: when the plurality of discard timers do not expire, the first data set is determined not to be discarded. Specifically, when any one of the plurality of discard timers does not expire, the first data set is not discarded.

Refer to FIG. 10a. The data transmission method may include the following steps.

S101: A gNB may send a radio resource control (radio resource control, RRC) message to UE, and correspondingly, the UE may receive the RRC message from the gNB.

For example, the RRC message may be used to carry or indicate related configuration information of the at least one first timer, for example, a discarding rule (that is, a specific first timer or specific first timers in the at least one first timer), a duration threshold of the at least one first timer, and the like. It may be understood that the RRC message may further include other information. Details are not described herein again.

The UE serves as a transmitting side. When both a packet concatenation function and a discard timer function are enabled at a PDCP layer, the UE may perform the following steps for a plurality of data units that are to be concatenated in the same data set, for example, a UL packet 1 (that is, a PDCP SDU 1) and a UL packet 2 (that is, a PDCP SDU 2).

S102: When the UL packet 1 arrives at a PDCP entity, the PDCP entity starts a discard timer associated with the PDCP SDU 1.

S103: When the UL packet 2 arrives at the PDCP entity, the PDCP entity starts a discard timer associated with the PDCP SDU 2.

S104: The PDCP entity performs a PDCP layer packet concatenation function, to concatenate the PDCP SDU 1 and the PDCP SDU 2 into the same PDCP PDU.

S105: The UE sends a concatenated packet 1 to the gNB. It should be understood that, in this application, the packet 1 transmitted between the UE and the gNB is delivered to a lower layer after PDCP-related processing is completed on an IP packet at the PDCP layer, and is transmitted to a peer device. In this embodiment of this application, PDCP processing other than the packet concatenation function and the discard timer function is not described again, and is not distinguished one by one and described again in the following.

S106: When the discard timer associated with the PDCP SDU 1 expires, the PDCP entity does not discard the PDCP SDU 1.

S107: When the discard timer associated with the PDCP SDU 2 expires, the PDCP SDU 1 and the PDCP SDU 2 are discarded.

In Embodiment 1, each data unit may be associated with a discard timer. When receiving each data unit, the PDCP entity starts the discard timer associated with the data unit. For a plurality of data units on which a packet concatenation function is performed, when discard timers associated with all data units in the data set expire, all data units in the data set are discarded. Therefore, a behavior of the discard timer is specified, so that the plurality of data units concatenated in the same data set can be simultaneously discarded, thereby ensuring consistency of discarding moments of all data units in the same data set, and avoiding a problem of an increased possibility of a data transmission failure between two communication parties caused by inconsistency of discarding moments of different data units concatenated in the same data set.

Embodiment 2: That the at least one first timer is associated with a first data set includes: the at least one first timer is a discard timer associated with a first data unit, and the first data unit is a last data unit in the first data set; and the method further includes: when a second data unit in the first data set is received, stopping a discard timer associated with a data unit concatenated in the first data set before the second data unit. Optionally, the method further includes: when the second data unit in the first data set is received, starting a discard timer associated with the second data unit.

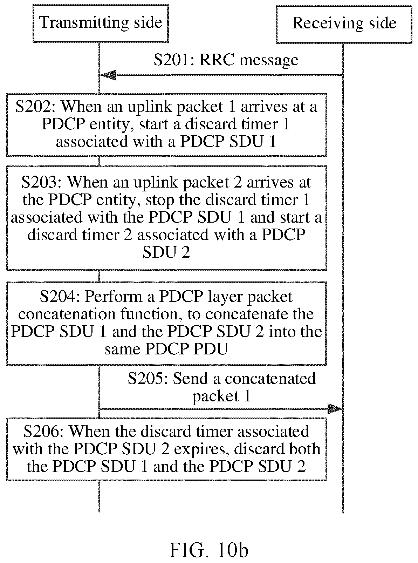

Refer to FIG. 10b. The data transmission method may include the following steps.

S201: A gNB may send an RRC message to UE, and correspondingly, the UE may receive the RRC message from the gNB.

For example, the RRC message may be used to carry or indicate related configuration information of the at least one first timer, for example, a discarding rule (that is, a specific first timer or specific first timers in the at least one first timer), a duration threshold of the at least one first timer, and the like. It may be understood that the RRC message may further include other information. Details are not described herein again.

The UE serves as a transmitting side. When both a packet concatenation function and a discard timer function are enabled at a PDCP layer, the UE may perform the following steps for a plurality of data units that are to be concatenated in the same data set, for example, a UL packet 1 (that is, a PDCP SDU 1) and a UL packet 2 (that is, a PDCP SDU 2).

S202: When the UL packet 1 arrives at a PDCP entity, the PDCP entity starts a discard timer associated with the PDCP SDU 1.

S203: When the UL packet 2 arrives at the PDCP entity, the PDCP entity stops the discard timer associated with the PDCP SDU 1, and starts a discard timer associated with the PDCP SDU 2.

S204: The PDCP entity performs a PDCP layer packet concatenation function, to concatenate the PDCP SDU 1 and the PDCP SDU 2 into the same PDCP PDU.

S205: The UE sends a concatenated packet 1 to the gNB.

S206: When the discard timer associated with the PDCP SDU 2 expires, the PDCP entity discards the PDCP SDU 1 and the PDCP SDU 2.

In Embodiment 2, when receiving each data unit, the PDCP entity may start a discard timer associated with the data unit, stop the discard timer when data units are subsequently concatenated, and start a discard timer associated with a newly received data unit. When a discard timer associated with a last concatenated data unit expires, the PDCP entity discards all data units in the entire data set. Therefore, a behavior of the discard timer is specified, so that the plurality of data units concatenated in the same data set can be simultaneously discarded, thereby ensuring consistency of discarding moments of all data units in the same data set, and avoiding a problem of an increased possibility of a data transmission failure between two communication parties caused by inconsistency of discarding moments of different data units concatenated in the same data set. In addition, there is no need to simultaneously maintain a discard timer for each data unit, thereby reducing system overheads.

Embodiment 3: That the at least one first timer is associated with a first data set includes: the at least one first timer is one discard timer; and the method further includes: stopping the concatenation of the first data set; and starting the discard timer. Optionally, the stopping the concatenation of the first data set includes: when a first condition is met, stopping the concatenation of the first data set, where the first condition includes at least one of the following: a concatenation timer of the first data set expires; a concatenation counter of the first data set reaches a count threshold; or a size of the first data set is greater than or equal to a specific threshold.

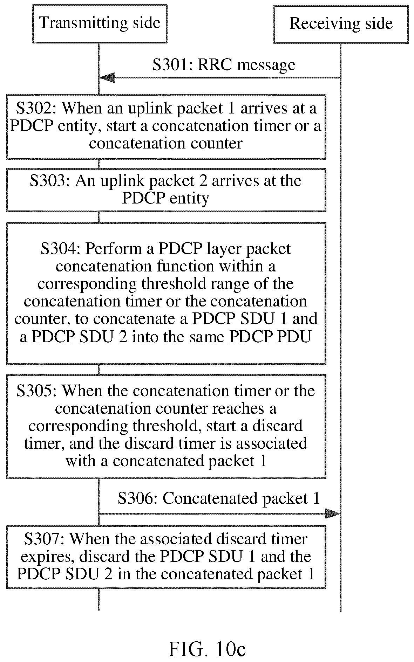

Refer to FIG. 10c. The data transmission method may include the following steps.

S301: A gNB may send an RRC message to UE, and correspondingly, the UE may receive the RRC message from the gNB.

For example, the RRC message may be used to carry or indicate related configuration information of the at least one first timer, for example, a discarding rule (that is, a specific first timer or specific first timers in the at least one first timer), a duration threshold of the at least one first timer, configuration information of a concatenation timer/concatenation counter, and the like. It may be understood that the RRC message may further include other information. Details are not described herein again.

The UE serves as a transmitting side. When both a packet concatenation function and a discard timer function are enabled at a PDCP layer, the UE may perform the following steps for a plurality of data units that are to be concatenated in the same data set, for example, a UL packet 1 (that is, a PDCP SDU 1) and a UL packet 2 (that is, a PDCP SDU 2).

S302: The UL packet 1 arrives at a PDCP entity, and the PDCP entity starts a concatenation timer or a concatenation counter.

S303: The UL packet 2 arrives at the PDCP entity.

S304: The PDCP entity performs a PDCP layer packet concatenation function within a duration threshold of the concatenation timer or a count threshold of the concatenation counter, to concatenate the PDCP SDU 1 and the PDCP SDU 2 into the same PDCP PDU.

S305: When the concatenation of the packet 1 ends, for example, when the concatenation timer expires or the concatenation counter reaches the count threshold, start a discard timer, and the discard timer is associated with a concatenated packet 1.

S306: The UE sends the concatenated packet 1 to the gNB.

S307: When the associated discard timer in S305 expires, discard the PDCP SDU 1 and the PDCP SDU 2 in the concatenated packet 1.

In Embodiment 3, the PDCP entity may perform the packet concatenation function based on the concatenation timer or the concatenation counter. When performing the packet concatenation function based on the concatenation timer, the PDCP entity may start, after the concatenation timer expires, the discard timer associated with the data set. When performing the packet concatenation function based on the concatenation counter, the PDCP entity may start, when the concatenation counter reaches the count threshold, that is, when a last data unit is concatenated (or when a concatenation operation stops), the discard timer associated with the data set, and when the discard timer expires, discard all data units in the entire data set. It may be understood that the concatenation is stopped in another condition (for example, a size of the first data set is greater than or equal to a specified threshold).

Therefore, a behavior of the discard timer is specified, so that the plurality of data units concatenated in the same data set can be simultaneously discarded, thereby ensuring consistency of discarding moments of all data units in the same data set, and avoiding a problem of an increased possibility of a data transmission failure between two communication parties caused by inconsistency of discarding moments of different data units concatenated in the same data set. In addition, there is no need to simultaneously maintain a discard timer for each data unit, and a delay of the packet concatenation function may be further considered within the discard duration of the data unit, so that the delay can be ensured while system overheads are reduced.

It may be understood that, in Embodiment 3, the RRC messages used by the gNB to configure the discard timer, the concatenation timer, or the concatenation counter may be the same RRC message, or may be different RRC messages. This is not limited in this application. The related configuration information of the concatenation timer or the concatenation counter may alternatively be configured according to experience, or may be configured according to an application scenario or a service requirement. Details are not described herein again. In addition, the discard timer associated with the data set may be a timer of each data unit, a timer of each concatenated packet, or a configured timer specific to a packet concatenation function. This is not limited in this application.

Embodiment 4: That the at least one first timer is associated with a first data set includes: the at least one first timer is one discard timer; and the method further includes: when a third data unit in the first data set is received, starting or restarting the discard timer, where the third data unit is any data unit in the first data set. It should be noted that, in this application, when the third data unit is the first data unit to be concatenated in the first data set, the method includes: when the third data unit is received, starting the discard timer; or when the third data unit is not the first data unit (for example, the second, the third, or a subsequent data unit) to be concatenated in the first data set, the method includes: restarting the discard timer when the third data unit is received.

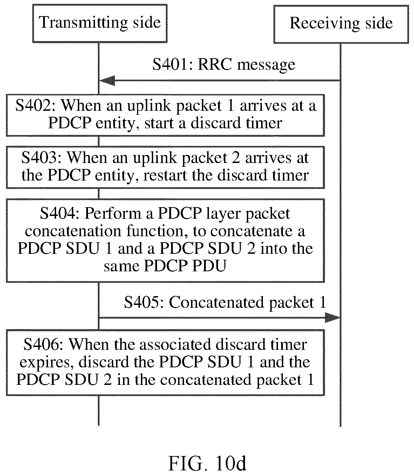

Refer to FIG. 10d. The data transmission method may include the following steps.

S401: A gNB may send an RRC message to UE, and correspondingly, the UE may receive the RRC message from the gNB.

For example, the RRC message may be used to carry or indicate related configuration information of the at least one first timer, for example, a discarding rule (that is, a specific first timer or specific first timers in the at least one first timer), a duration threshold of the at least one first timer, and the like. It may be understood that the RRC message may further include other information. Details are not described herein again.

The UE serves as a transmitting side. When both a packet concatenation function and a discard timer function are enabled at a PDCP layer, a plurality of data units that are to be concatenated in the same data set, for example, a UL packet 1 (that is, a PDCP SDU 1) and a UL packet 2 (that is, a PDCP SDU 2), are associated with one discard timer. In this case, the PDCP entity may perform the following steps.

S402: When the UL packet 1 arrives at a PDCP entity, the PDCP entity starts a discard timer associated with a data set corresponding to the UL packet 1.

S403: When the UL packet 2 arrives at the PDCP entity, the PDCP entity restarts a discard timer associated with the data set.

S404: The PDCP entity performs a PDCP layer packet concatenation function, to concatenate the PDCP SDU 1 and the PDCP SDU 2 into the same PDCP PDU.

S405: The UE sends the concatenated packet 1 to the gNB.

S406: When the discard timer associated with the data set expires, discard the concatenated PDCP SDU 1 and PDCP SDU 2 in the data set.

In Embodiment 4, the plurality of data units concatenated in the same data set are associated with the same discard timer. When receiving each data unit, the PDCP entity may start or restart the discard timer, and when the discard timer expires, discard all data units in the entire data set. Therefore, a behavior of the discard timer is specified, so that the plurality of data units concatenated in the same data set can be simultaneously discarded, thereby ensuring consistency of discarding moments of all data units in the same data set, and avoiding a problem of an increased possibility of a data transmission failure between two communication parties caused by inconsistency of discarding moments of different data units concatenated in the same data set. In addition, there is no need to simultaneously maintain a discard timer for each data unit, thereby reducing system overheads.

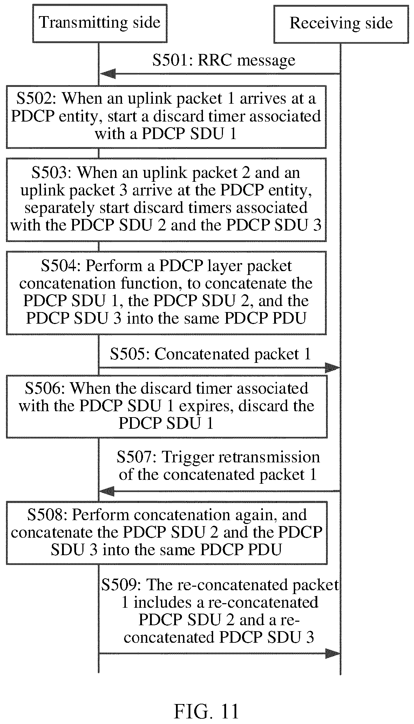

In addition, in this embodiment of this application, for a problem of an increased possibility of a data transmission failure between two communication parties caused by enabling a packet concatenation function, another solution is further provided and described below with reference to FIG. 11.

### Embodiment 5

In this embodiment, when both a packet concatenation function and a discard timer function are enabled, a behavior of the discard timer associated with each data unit may not be changed, and the discard function is still performed by using the data unit as a granularity. That is, when receiving each data unit, the communication apparatus starts a discard timer associated with the data unit, and discards the data unit when the discard timer expires. When concatenation preprocessing has been performed or a data set to which the data unit belongs needs to be retransmitted, concatenation (or rebuilding (rebuilding)) is performed again for another data unit that is not discarded in the data set, and a new concatenated packet is retransmitted to the receiving side. When the data unit needs to be discarded, if a PDU (for example, a PDCP PDU) corresponding to a concatenated packet to which the data unit belongs has been delivered to a lower layer, for example, an RLC layer, the lower layer further needs to be indicated to discard, for example, a corresponding PDCP PDU (RLC SDU).

It may be understood that, in all embodiments, when all data units (for example, PDCP SDUs) included in the concatenated packet are discarded, the PDCP entity indicates the RLC layer to discard, for example, to discard a corresponding RLC SDU.

Refer to FIG. 11. The data transmission method may include the following steps.

S501: A gNB may send an RRC message to UE, and correspondingly, the UE may receive the RRC message from the gNB. For details, refer to the foregoing Embodiment 1 and Embodiment 2. Details are not described herein again.

The UE serves as a transmitting side. When both a packet concatenation function and a discard timer function are enabled at a PDCP layer, the UE may perform the following steps for a plurality of data units that are to be concatenated in the same data set, for example, a UL packet 1 (that is, a PDCP SDU 1), a UL packet 2 (that is, a PDCP SDU 2), and a UL packet 3 (that is, a PDCP SDU 3).

S502: When the UL packet 1 arrives at a PDCP entity, the PDCP entity starts a discard timer associated with the PDCP SDU 1.

S503: When the UL packet 2 and the UL packet 3 arrive at the PDCP entity, the PDCP entity separately starts discard timers associated with the PDCP SDU 2 and the PDCP SDU 3.

S504: The PDCP entity performs a PDCP layer packet concatenation function, to concatenate the PDCP SDU 1, the PDCP SDU 2, and the PDCP SDU 3 into the same PDCP PDU.

S505: The UE sends a concatenated packet 1 to the gNB, where the packet 1 includes the concatenated PDCP SDU 1, PDCP SDU 2, and PDCP SDU 3.

S506: When the discard timer associated with the PDCP SDU 1 expires, the PDCP entity discards the PDCP SDU 1.

S507: Trigger retransmission of the concatenated packet 1. The gNB may trigger retransmission of the concatenated packet 1 to the UE, or the UE may trigger retransmission of the concatenated packet 1. This is not limited herein.

S508: In this case, the PDCP SDU 1 has been discarded, and the PDCP SDU 2 and the PDCP SDU 3 have not been discarded. The PDCP entity performs concatenation again, to re-concatenate the PDCP SDU 2 and the PDCP SDU 3 into the same PDCP PDU.

S509: The UE sends a re-concatenated packet 1 to the gNB, where the packet 1 includes the re-concatenated PDCP SDU 2 and the re-concatenated PDCP SDU 3.

If retransmission of the concatenated packet 1 is triggered, a PDCP PDU corresponding to the concatenated packet has been delivered to the RLC layer, and the PDCP entity further needs to indicate the RLC entity to discard, for example, a corresponding PDCP PDU (that is, an RLC SDU).

It may be understood that, in all embodiments, each concatenated packet may be associated with a sequence number (sequence number, SN). When all data units (for example, PDCP SDUs) included in the concatenated packet are discarded, the PDCP entity indicates the RLC layer to discard, for example, a corresponding RLC SDU.

In Embodiment 5, for a problem of an increased possibility of a data transmission failure between two communication parties caused by enabling a packet concatenation function, another solution is provided. To be specific, a discarding function is performed based on a granularity of a data unit, and when concatenation preprocessing has been performed or a packet in which the data unit is located needs to be retransmitted, a concatenation function is performed again, other data units that are not discarded are re-concatenated into a concatenated packet, and a re-concatenated packet is retransmitted to a receiving side. Therefore, in this solution, for a problem of an increased possibility of a data transmission failure between two communication parties caused by enabling a packet concatenation function, a solution of performing concatenation again is provided, to avoid a concatenation error as much as possible when a PDCP entity of a transmitting side retransmits a packet 1, thereby ensuring normal operation of a reordering function and the like at a receiving side.

### Embodiment 6

In this embodiment, that a transmitting side discards a data set or a data unit may be triggered by a status report from a receiving side. In this application, the status report from the receiving side may be used to indicate that the first data set is successfully received, or indicate that all the plurality of concatenated data units in the first data set are successfully received. Correspondingly, the transmitting side discards the first data set based on the status report. Alternatively, the status report from the receiving side may be used to indicate that the at least one concatenated data unit in the first data set is successfully received. Correspondingly, the transmitting side may discard the at least one data unit based on the status report, and when retransmission is required, perform concatenation again on another data unit in the data set to which the at least one data unit belongs, and perform retransmission.

For example, if the packet concatenation function is enabled at the PDCP layer, the status report may be specifically a PDCP status report. After the PDCP layer packet concatenation function is enabled, the PDCP status report from the receiving side may be used to indicate that the first data set is successfully received, or indicate that all concatenated data units in the first data set are successfully received. In this case, the PDCP entity of the transmitting side discards all data units included in the first data set. Alternatively, the PDCP status report from the receiving side may be used to indicate that the at least one data unit in the first data set is successfully received. Correspondingly, the transmitting side may discard the at least one data unit based on the PDCP status report, and when retransmission is required, perform concatenation again on another data unit in the data set to which the at least one data unit belongs, and perform retransmission.

In Embodiment 6, in a scenario in which the packet concatenation function is enabled, an effective solution to a new problem caused by introduction of the packet concatenation function is provided, to facilitate solving the problem of the increased possibility of the data transmission failure between two communication parties caused by enabling the packet concatenation function.

Therefore, according to Embodiment 1 to Embodiment 6, when both the packet concatenation function and the discard timer function are enabled at the PDCP layer, the discard timer associated with the first data set and a behavior of the discard timer are specified, including a start behavior, a stop behavior, a restart behavior, a timeout behavior, or the like, so that the plurality of data units concatenated in the same data set can be simultaneously discarded, thereby ensuring that data units in the same concatenated packet can be successfully retransmitted in an AM mode. In the foregoing solution, in a scenario in which the packet concatenation function is enabled, an effective solution to a new problem caused by introduction of the packet concatenation function is provided, to facilitate solving the problem of the increased possibility of the data transmission failure between two communication parties caused by enabling the packet concatenation function.

Case 2: Both a packet concatenation function and a ROHC function are enabled.

Currently, when the ROHC function is enabled, there are three modes of operation (Modes of operation) of ROHC, namely, unidirectional (Unidirectional), bidirectional optimistic (Bidirectional Optimistic), and bidirectional reliable (Bidirectional Reliable). The modes of operation depend on the environment features of a compression protocol, such as feedback capabilities, error possibility and distribution, and impact of a change in a header size. All ROHC implementations need to support and implement the three modes of operation. In each mode of operation, a compressor and a decompressor may separately perform compression state switching. The compressor and the decompressor have three states respectively, and both start from a lowest-level compression state and gradually transit to a higher-level state. Synchronous switching is not required between the compressor and the decompressor. In normal operation, only the compressor returns to a low-level state temporarily. The decompressor returns to a low-level state only when context damage (context damage) is detected.

The ROHC decompressor has three compression states: a no context (NC) state, a static context (SC) state, and a full context (FC) state. The decompressor starts from the lowest-level "no context" state and gradually switches to a higher-level state. The decompressor state mechanism usually remains to be in the full context state once the decompressor is in the "full context" state. The decompressor sends ROHC feedback information to the compressor over a ROHC feedback channel based on a success or failure of the decompression, where the feedback information may include positive (positive) acknowledgment (ACK) feedback, negative (negative) acknowledgment (NACK) feedback, static (STATIC)-NACK, and the like.

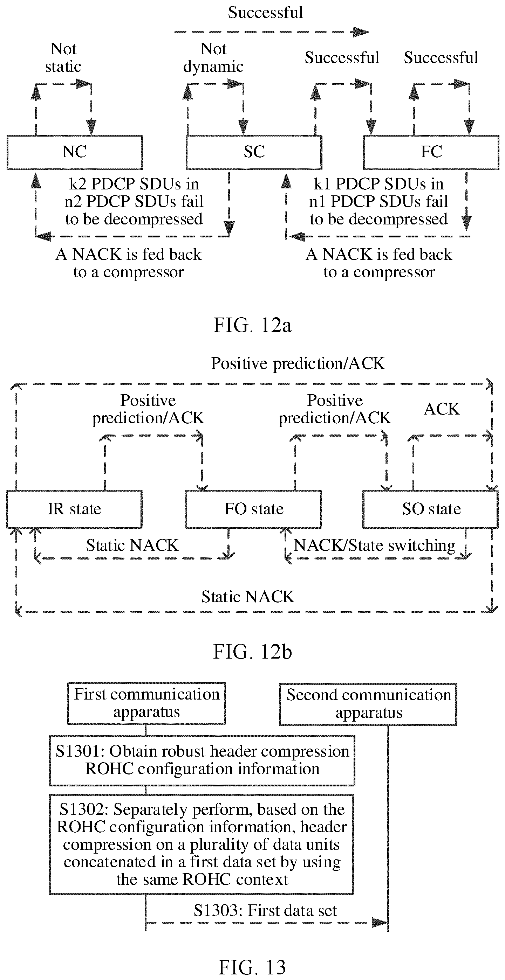

An R mode is used as an example. Refer to FIG. 12a which is an embodiment not covered by the claimed invention, but an examples suitable for understanding the invention. If the decompressor works in the FC state, if decompression of k1 PDCP SDUs in n1 PDCP SDUs fails, the decompressor switches to the SC state and needs to send a NACK feedback to the compressor; or if the decompressor works in the SC state, if decompression of k2 PDCP SDUs in n2 PDCP SDUs fails, the decompressor switches to the NC state and needs to send a NACK feedback to the compressor.

The ROHC compressor has three compression states: an initialization and refresh (IR) state, a first order (FO) state, and a second order (SO) state. The compressor starts from the lowest-level state (IR state) and gradually switches to a higher-level state.

The compressor will keep operating in the highest-level possible state if the compressor is confident enough that the decompressor has necessary information to decompress a header in this state. The decision of the switching between the compression states of the compressor (based on each mode of operation in detail) is based on at least one of the following: (1) the switching of the header; (2) ACK from the decompressor; (3) NACK from the decompressor; (4) Periodicity timeout (when operating in the unidirectional mode, that is, through a simplex (simplex) channel or when feedback is not enabled). When receiving compression feedback information from the decompressor, the compressor adjusts the compression state of the compressor according to content in the compression feedback information, and updates a compression context.

An R mode is used as an example. Refer to FIG. 12b which is an embodiment not covered by the claimed invention, but an examples suitable for understanding the invention. If the compression feedback information received by the compressor is NACK, it indicates that the compression context of the decompressor is damaged, and the compressor needs to update the compression context. The compressor switches to a lower-level state, and subsequently sends a PDCP SDU that includes relatively complete header information.

When both the packet concatenation function and the ROHC header compression function are enabled at the SDAP layer or PDCP layer, a plurality of IP packets are concatenated in the same PDU (for example, an SDAP PDU or a PDCP PDU) as a concatenated packet for transmission. If one concatenated packet is lost, it is equivalent to that a plurality of IP packets are lost. If header compression and decompression operations are separately performed on each IP packet, for the decompressor, a possibility that a ROHC context of the decompressor is out of synchronization with a ROHC context of the compressor is increased, thereby greatly increasing a possibility of failure in decompressing subsequent packets.

To reduce the possibility of the decompression failure, an embodiment of this application provides a data transmission method. In the method, when both a packet concatenation function and a ROHC header compression function are enabled, a decompressor performs ROHC feedback based on a granularity of at least one data set. Optionally, the compressor uses the same ROHC context to separately perform header compression on a plurality of data units in the same data set, thereby reducing a possibility of a decompression failure caused by a packet loss at the decompressor because the packet concatenation function is enabled.

FIG. 13 is a schematic flowchart of a data transmission method according to an embodiment not covered by the claimed invention, but an examples suitable for understanding the invention. The data transmission method may be implemented by a communication apparatus. The communication apparatus may be the terminal device or the network device in FIG. 1a, FIG. 1b, or FIG. 1c. The terminal device or the network device may be used as a compressor to perform the data transmission method shown in FIG. 13, and implement data transmission with a corresponding network device or terminal device that is used as a decompressor. For ease of description, the following describes the data transmission method by using an example in which the first communication apparatus is used as a compressor and the second communication apparatus is used as a decompressor.

Refer to FIG. 13. The data transmission method may include the following steps.

S1301: A first communication apparatus obtains robust header compression ROHC configuration information.

S1302: The first communication apparatus separately performs, based on the ROHC configuration information, header compression on a plurality of data units concatenated in a first data set by using the same ROHC context.

Optionally, S1303: The first communication apparatus sends the first data set to a second communication apparatus. Correspondingly, the second communication apparatus receives the first data set from the first communication apparatus, and separately decompresses, by using the same ROHC context, the plurality of data units concatenated in the first data set.

Optionally, to ensure that the first communication apparatus uses the same ROHC context to separately perform header compression on the plurality of data units concatenated in the first data set, and reduce a possibility of out-of- synchronization between the ROHC context of the compressor and the ROHC context of the decompressor, in a possible implementation, in a process in which the first communication apparatus uses the same ROHC context to separately perform header compression on the plurality of data units concatenated in the first data set, if one or more of the following conditions are met, it is determined not to update the ROHC context: a ROHC feedback is received from the second communication apparatus, where the ROHC feedback is used to indicate that at least one second data set before the first data set is successfully decompressed or fails to be decompressed; a ROHC timer or a ROHC counter of the first communication apparatus meets a corresponding update condition; or a ROHC compression state of the first communication apparatus is switched.

Optionally, the first communication apparatus may further update the ROHC context before concatenation is performed on a plurality of data units in a third data set after the first data set. The first communication apparatus performs header compression on the data unit in the third data set by using the updated ROHC context.

Therefore, as a compressor, the first communication apparatus may compress, by using the same ROHC compression context, data units (for example, SDUs) concatenated in the same data set (for example, a PDU). If a feedback from the second communication apparatus serving as the decompressor is received during the concatenation, or the concatenation timer of the compressor expires and/or the concatenation counter reaches a counting threshold, the ROHC context of the compressor is not updated temporarily, and the compression context is updated until concatenation of a current concatenated packet is completed and before a next concatenated packet is started. Because the plurality of data units in the same data set use the same ROHC context, if the first data unit included in the data set can be successfully decompressed, other data units in the data set can also be successfully decompressed.

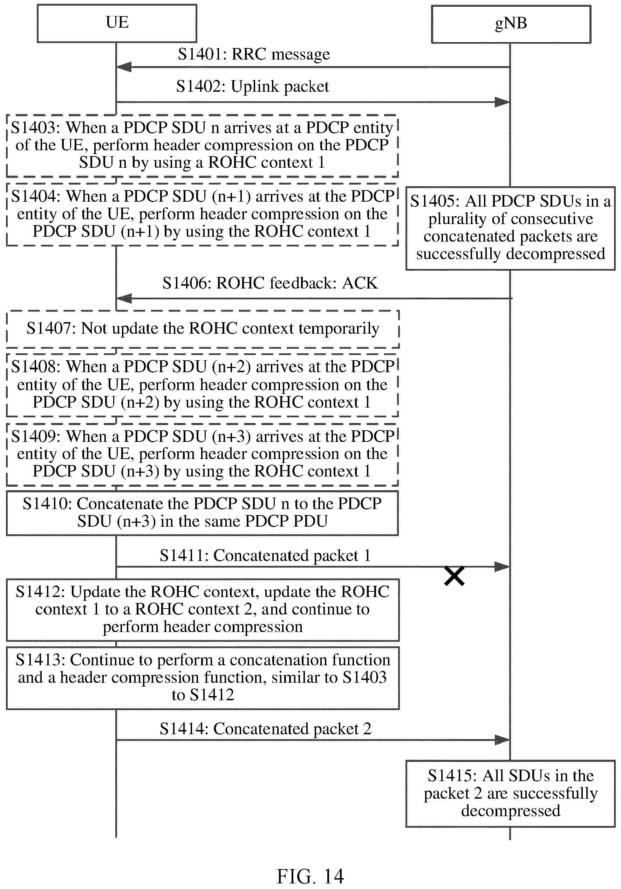

For ease of understanding, refer to FIG. 14 which is an embodiment not covered by the claimed invention, but an examples suitable for understanding the invention. Steps of the data transmission method are described by using an example in which UE is a compressor and a gNB is a decompressor.

S1401: The gNB sends an RRC message to the UE, where the RRC message may include ROHC-related configuration information, for example, a maximum context quantity.

S1402: The UE sends an uplink packet to the gNB. For ease of differentiation, the uplink packet is collectively referred to as a second data set.

In an example in which a packet concatenation function and a ROHC function are enabled at a PDCP layer, a PDCP PDU delivered by a PDCP layer on the UE side to an RLC layer includes a plurality of PDCP SDUs on which header compression and concatenation are performed. Correspondingly, on the gNB side, the PDCP PDU delivered by the RLC layer to the PDCP layer includes a plurality of PDCP SDUs on which header compression and concatenation are performed. The PDCP entity of the gNB is configured to perform decompression and concatenation splitting on the plurality of PDCP SDUs.

Optionally, S1403: On the UE side, when a PDCP SDU n arrives at a PDCP entity of the UE, the PDCP entity of the UE performs header compression on the PDCP SDU n by using a ROHC context 1.

Optionally, S1404: When a PDCP SDU (n+1) arrives at the PDCP entity of the UE, the PDCP entity of the UE performs header compression on the PDCP SDU (n+1) by using the ROHC context 1.

S1405: When the gNB continuously receives a concatenated uplink packet from the UE, the PDCP entity of the gNB performs a decompression operation on a PDCP SDU in each concatenated packet. In this case, the gNB performs ROHC feedback based on a granularity of at least one data set, to indicate that decompression succeeds or fails. For example, when all PDCP SDUs in a plurality of consecutive concatenated packets are successfully decompressed, a ROHC ACK is fed back to the UE; or when decompression of at least one PDCP SDU included in k1 concatenated packets in n1 concatenated packets fails, a ROHC NACK is fed back to the UE.

S1406: The gNB sends a ROHC feedback, for example, an ACK, to the UE.

Optionally, S1407: If the UE is performing header compression on a PDCP SDU on which a concatenation function is being performed or on which a concatenation function is to be performed, after receiving a ROHC feedback, the UE does not update the ROHC context.

Optionally, S1408: When a PDCP SDU (n+2) arrives at the PDCP entity of the UE, the PDCP entity of the UE performs header compression on the PDCP SDU (n+2) by using the ROHC context 1.

Optionally, S1409: When a PDCP SDU (n+3) arrives at the PDCP entity of the UE, the PDCP entity of the UE performs header compression on the PDCP SDU (n+3) by using the ROHC context 1.

S1410: When an event that triggers concatenation to end occurs, such as a concatenation timer expires, or a concatenation counter reaches a count threshold, the PDCP entity of the UE determines to concatenate the PDCP SDU n to the PDCP SDU (n+3) in the same PDCP PDU, and the concatenation ends. To be specific, the PDCP SDU (n+4) is no longer concatenated in the PDCP PDU. For ease of differentiation, the PDCP PDU may be referred to as a first data set, and the PDCP SDU n to the PDCP SDU (n+3) concatenated in the PDCP PDU is a plurality of data units concatenated in the first data set.

S1411: The UE sends a concatenated packet 1 (including the PDCP SDU n to the PDCP SDU (n+3)) to the gNB. In this case, the gNB may fail to receive the concatenated packet 1 due to a factor such as poor link quality.

S1412: On the UE side, before performing concatenation on a plurality of data units in the third data set after the first data set, the PDCP entity of the UE updates the ROHC context 1 to a ROHC context 2, and then continues to perform the ROHC function based on the ROHC context 2.

S1413: The PDCP entity of the UE continues to perform a packet concatenation function and a ROHC function on the plurality of data units in the third data set based on the ROHC context 2, where a packet obtained after the concatenation is a packet 2. For detailed implementation steps, refer to S1403 to S1412. Details are not described herein again.

S1414: The UE sends the concatenated packet 2 (corresponding to the third data set) to the gNB.

S1415: The gNB decompresses a PDCP SDU in the concatenated packet 2. Although the PDCP SDU in the packet 1 is lost, and consequently, the ROHC context 1 associated with the PDCP SDU 1 is also lost, the gNB can still successfully decompress all SDUs in the packet 2 due to anti-packet-loss performance of the ROHC function.

Therefore, in the foregoing solution, in a scenario where both the packet concatenation function and the ROHC function are enabled, a quantity of times/frequency of ROHC feedbacks performed by the decompressor is reduced, a quantity of times that the compressor (during the concatenation) receives the ROHC feedback and updates the ROHC context is reduced, and the possibility of the decompression failure due to packet loss after the packet concatenation function is enabled is reduced.

So far, the communication system and the data transmission method in this application are described in detail with reference to FIG. 1a to FIG. 1c, FIG. 2 to FIG. 4, FIG. 5a and FIG. 5b, FIG. 6 to FIG. 9, FIG. 10a to FIG. 10d, FIG. 11, FIG. 12a and FIG. 12b, and FIG. 13 to FIG. 17. In this solution, when the first communication apparatus is used as a transmitting side or a compressor, when the packet concatenation function is enabled and the discard timer function or the ROHC function is also enabled, different discarding moments of different data units in the same data set are avoided as much as possible, or a possibility of ROHC context out-of-synchronization between two communication parties for implementing a header compression and/or decompression function is reduced, to facilitate solving the problem of the increased possibility of the data transmission failure between two communication parties caused by enabling the packet concatenation function.

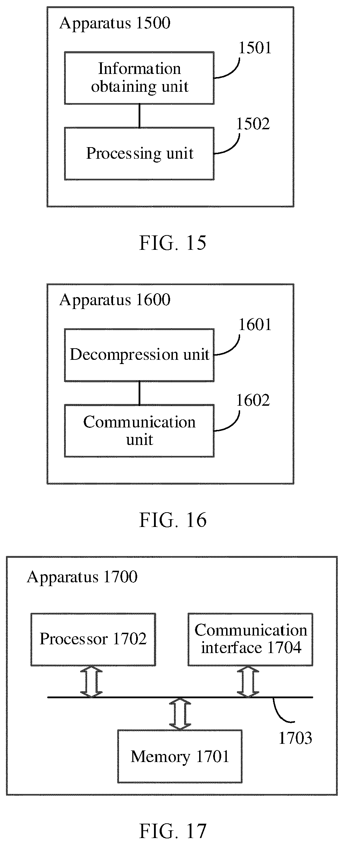

Apparatuses provided in embodiments of this application are described below in detail with reference to FIG. 15 and FIG. 16. It should be understood that descriptions of the apparatus embodiments correspond to the descriptions of the method embodiments. Therefore, for content that is not described in detail, refer to each other.

FIG. 15 is a schematic diagram of a communication apparatus 1500 according to an embodiment of this application. The communication apparatus 1500 is configured to implement functions of the first communication apparatus or the second communication apparatus in the foregoing method. For example, the apparatus may be a software module or a chip system. The apparatus may include a chip, or may include a chip and another discrete device. The apparatus 1500 includes an information obtaining unit 1501 and a processing unit 1502. The information obtaining unit 1501 is configured to obtain information, and may be implemented as a communication interface, a transceiver unit, an input/output interface, or the like. The processing unit 1502 may be configured to perform processing-related operations of the first communication apparatus or the second communication apparatus in the foregoing method embodiments.

In some embodiments, the information obtaining unit 1501 is configured to obtain a duration threshold of at least one first timer, where the at least one first timer is associated with a first data set, and the first data set includes a plurality of concatenated data units. The processing unit 1502 is configured to discard the first data set based on the duration threshold of the at least one first timer when the at least one first timer expires.

Optionally, that the at least one first timer is associated with a first data set includes: the at least one first timer is a plurality of discard timers, and each of the plurality of discard timers is associated with each of the plurality of data units.

Optionally, the processing unit is configured to: when the plurality of discard timers do not expire, determine not to discard the first data set.

Optionally, the at least one first timer is a discard timer associated with a first data unit, and the first data unit is a last data unit in the first data set; and the processing unit is further configured to: when a second data unit in the first data set is received, stop a discard timer associated with a data unit concatenated in the first data set before the second data unit.

Optionally, that the at least one first timer is associated with a first data set includes: the at least one first timer is one discard timer; and the processing unit is further configured to: stop the concatenation of the first data set; and start the discard timer.

Optionally, the processing unit is configured to: when a first condition is met, stop the concatenation of the first data set, where the first condition includes at least one of the following: a concatenation timer of the first data set expires; a concatenation counter of the first data set reaches a count threshold; or a size of the first data set is greater than or equal to a specific threshold.

Optionally, that the at least one first timer is associated with a first data set includes: the at least one first timer is one discard timer; and the processing unit is further configured to: when a third data unit in the first data set is received, start or restart the discard timer, where the third data unit is any data unit in the first data set.

In some other embodiments, the information obtaining unit 1501 is configured to obtain robust header compression ROHC configuration information; and the processing unit 1502 is configured to separately perform, based on the ROHC configuration information, header compression on a plurality of data units concatenated in the first data set by using the same ROHC context.

Optionally, in a process of separately performing header compression on the plurality of data units concatenated in the first data set by using the same ROHC context, the processing unit determines not to update the ROHC context if one or more of the following conditions are met: a ROHC feedback is received from a second communication apparatus, where the ROHC feedback is used to indicate that at least one second data set before the first data set is successfully decompressed or fails to be decompressed; a ROHC timer or a ROHC counter meets a corresponding update condition; or a ROHC compression state is switched.

Optionally, the processing unit is further configured to update the ROHC context before concatenation is performed on a plurality of data units in a third data set after the first data set.

FIG. 16 is a schematic diagram of a communication apparatus 1600 according to an embodiment not covered by the claimed invention, but an examples suitable for understanding the invention. The communication apparatus 1600 is configured to implement functions of the second communication apparatus in the foregoing method. For example, the apparatus may be a software module or a chip system. The apparatus may include a chip, or may include a chip and another discrete device. The apparatus 1600 includes a decompression unit 1601 and a communication unit 1602. The decompression unit 1601 is configured to perform a decompression operation. The communication unit 1602 is configured to communicate with another device, and may be implemented as a communication interface, a transceiver unit, an input/output interface, or the like.

In some embodiments, the decompression unit 1601 is configured to decompress a data unit in at least one data set from a first communication apparatus. The communication unit 1602 is configured to send a ROHC feedback to the first communication apparatus, where the ROHC feedback indicates, based on the at least one data set, that decompression succeeds or fails.

Optionally, that the ROHC feedback indicates, based on the at least one data set, that decompression succeeds includes: the ROHC feedback indicates that all data units in the at least one data set are successfully decompressed; and that the ROHC feedback indicates, based on the at least one data set, that decompression fails includes: the ROHC feedback indicates that at least one data unit in the at least one data set fails to be decompressed.

In this embodiment of this application, division into the units is an example, and is merely a logical function division. In actual implementation, another division manner may be used. In addition, the functional units in this embodiment of this application may be integrated into one processor, or each of the units may exist alone physically, or two or more units are integrated into one unit. The integrated unit may be implemented in a form of hardware, or may be implemented in a form of a software functional unit.

FIG. 17 is a schematic diagram of an apparatus 1700 according to an embodiment of this application. The apparatus 1700 may be a node or a component in a node, for example, a chip or an integrated circuit. The apparatus 1700 may include at least one memory 1701 and at least one processor 1702. Further, optionally, the apparatus may further include a communication interface 1704. Still further, optionally, a bus 1703 may be further included. The memory 1701, the processor 1702, and the communication interface 1704 are connected through the bus 1703.

The memory 1701 is configured to provide storage space, and the storage space may store data such as an operating system and a computer program. The memory 1701 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

The processor 1702 is a module for performing an arithmetic operation and/or a logical operation, and may be specifically one or a combination of a plurality of processing modules such as a central processing unit (central processing unit, CPU), a graphics processing unit (graphics processing unit, GPU), a microprocessor (microprocessor unit, MPU), an application-specific integrated circuit (application-specific integrated circuit, ASIC), a field programmable gate array (field programmable gate array, FPGA), a complex programmable logic device (complex programmable logic device, CPLD), a coprocessor (assisting a central processing unit to complete corresponding processing and application), and a microcontroller unit (microcontroller unit, MCU).

The communication interface 1704 may be configured to provide an information input or output for the at least one processor. And/or the communication interface may be configured to receive data sent from the outside and/or send data to the outside, and may be a wired link interface including an ethernet cable or the like, or may be a wireless link (Wi-Fi, Bluetooth, universal wireless transmission, a vehicle-mounted short-range communication technology, or the like) interface. Optionally, the communication interface 1704 may further include a transmitter (for example, a radio frequency transmitter or an antenna), a receiver, or the like coupled to the interface.

In some embodiments, the apparatus 1700 may be the first communication apparatus in the foregoing method embodiments or a component in the first communication apparatus, for example, a chip or an integrated circuit. The processor 1702 in the apparatus 1700 is configured to: read the computer program stored in the memory 1701, and control the first communication apparatus to perform the following operations: obtaining a duration threshold of at least one first timer, where the at least one first timer is associated with a first data set, and the first data set includes a plurality of concatenated data units; and discarding the first data set based on the duration threshold of the at least one first timer when the at least one first timer expires. For specific details, reference may be made to the descriptions in the foregoing method embodiments. Details are not described herein again.

In some other embodiments, the apparatus 1700 may be the first communication apparatus in the foregoing method embodiments or a component in the first communication apparatus, for example, a chip or an integrated circuit. The processor 1702 in the apparatus 1700 is configured to read the computer program stored in the memory 1701, and control the first communication apparatus to perform the following operations: obtaining robust header compression ROHC configuration information; and separately performing, based on the ROHC configuration information, header compression on a plurality of data units concatenated in a first data set by using the same ROHC context. For specific details, reference may be made to the descriptions in the foregoing method embodiments. Details are not described herein again.

In some other embodiments, the apparatus 1700 may be the second communication apparatus in the foregoing method embodiments or a component in the second communication apparatus, for example, a chip or an integrated circuit. The processor 1702 in the apparatus 1700 is configured to: read the computer program stored in the memory 1701, and control the second communication apparatus to perform the following operations: decompressing a data unit in at least one data set from a first communication apparatus; and sending a ROHC feedback to the first communication apparatus, where the ROHC feedback indicates, based on the at least one data set, that decompression succeeds or fails. For specific details, reference may be made to the descriptions in the foregoing method embodiments. Details are not described herein again.

An embodiment of this application further provides a terminal. The terminal may be an intelligent terminal such as a smartphone, a notebook computer, or a tablet computer; a mouse, a keyboard, a headset, a stereo, an in-vehicle playback device; or the like. The terminal includes a first communication apparatus and/or a second communication apparatus. The first communication apparatus and the second communication apparatus may respectively be the first communication apparatus and the second communication apparatus in the embodiment shown in FIG. 1a. The first apparatus and the second apparatus may be of the same type or different types.

Further, an embodiment of this application further provides an apparatus, including units configured to implement the embodiment shown in FIG. 15, FIG. 16, or FIG. 17. Alternatively, the apparatus includes a processor and an interface circuit. The processor is configured to communicate with another apparatus through the interface circuit, and perform the method in the foregoing method embodiment. Alternatively, the apparatus includes a processor, configured to invoke a program stored in a memory, to perform the method described in the foregoing embodiment.

An embodiment of this application further provides a computer-readable storage medium, including instructions. When the instructions are run on a computer, the computer is enabled to perform the method described in the foregoing embodiments.

An embodiment of this application further provides a chip system. The chip system includes at least one processor and an interface circuit. Further, optionally, the chip system may further include a memory or an external memory. The processor is configured to execute instructions and/or data exchange through the interface circuit, to implement the method in the foregoing method embodiments. The chip system may include a chip, or may include a chip and another discrete component.

An embodiment of this application further provides a computer program product, including instructions. When the instructions are run on a computer, the computer is enabled to perform the method described in the foregoing embodiments.

In embodiments of this application, the processor may be a general-purpose processor, a digital signal processor, an application-specific integrated circuit, a field-programmable gate array or another programmable logic device, a discrete gate or transistor logic device, a discrete hardware component, a coprocessor, or the like, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In embodiments of this application, the memory may be a non-volatile memory, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of instructions or a data structure and that can be accessed by a computer, but is not limited thereto. The memory in embodiments of this application may alternatively be a circuit or any other apparatus that can implement a storage function, and is configured to store program instructions and/or data.

All or some of the methods in embodiments of this application may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another web site, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clearly that, a person skilled in the art can make various modifications and variations to this application without departing from the scope of this invention, which is defined by the appended claims. This application is intended to cover these modifications and variations of this application provided that they fall within the protection scope of the claims.

## Claims

1. A data transmission method, wherein the method comprises:
obtaining (S901) a duration threshold of at least one first timer, wherein the at least one first timer is associated with a first data set, and the first data set comprises a plurality of concatenated data units; and
discarding (S902) the first data set based on the duration threshold of the at least one first timer when the at least one first timer expires,
wherein that the at least one first timer is associated with a first data set comprises: the at least one first timer is a plurality of discard timers, and each of the plurality of discard timers is associated with each of the plurality of concatenated data units, wherein the discarding (S902) the first data set when the at least one first timer expires comprises: when the plurality of discard timers do not expire, determining not to discard the first data set; or
wherein that the at least one first timer is associated with a first data set comprises: the at least one first timer is a discard timer associated with a first data unit, and the first data unit is a last data unit in the first data set; and the method further comprises: when a second data unit in the first data set is received, stopping a discard timer associated with a data unit concatenated in the first data set before the second data unit; or
wherein that the at least one first timer is associated with a first data set comprises: the at least one first timer is one discard timer; and the method further comprises: stopping the concatenation of the first data set; and starting the discard timer; or
wherein that the at least one first timer is associated with a first data set comprises: the at least one first timer is one discard timer; and the method further comprises: when a third data unit in the first data set is received, starting or restarting the discard timer, wherein the third data unit is any data unit in the first data set.

2. The method according to claim 1, wherein the stopping the concatenation of the first data set comprises:
when a first condition is met, stopping the concatenation of the first data set, wherein the first condition comprises at least one of the following:
a concatenation timer of the first data set expires;
a concatenation counter of the first data set reaches a count threshold; or
a size of the first data set is greater than or equal to a specific threshold.

3. A communication apparatus (1500), comprising:
an information obtaining unit (1501), configured to obtain a duration threshold of at least one first timer, wherein the at least one first timer is associated with a first data set, and the first data set comprises a plurality of concatenated data units; and
a processing unit (1502), configured to discard the first data set based on the duration threshold of the at least one first timer when the at least one first timer expires,
wherein that the at least one first timer is associated with a first data set comprises: the at least one first timer is a plurality of discard timers, and each of the plurality of discard timers is associated with each of the plurality of concatenated data units, wherein the processing unit (1502) is configured to: when the plurality of discard timers do not expire, determine not to discard the first data set; or
wherein the at least one first timer is a discard timer associated with a first data unit, and the first data unit is a last data unit in the first data set; and the processing unit (1502) is further configured to: when a second data unit in the first data set is received, stopping a discard timer associated with a data unit concatenated in the first data set before the second data unit; or
wherein that the at least one first timer is associated with a first data set comprises: the at least one first timer is one discard timer; and the processing unit (1502) is further configured to: stop the concatenation of the first data set; and start the discard timer; or
wherein that the at least one first timer is associated with a first data set comprises: the at least one first timer is one discard timer; and the processing unit (1502) is further configured to: when a third data unit in the first data set is received, start or restart the discard timer, wherein the third data unit is any data unit in the first data set.

4. The apparatus (1500) according to claim 3, wherein the processing unit (1502) is configured to:
when a first condition is met, stop the concatenation of the first data set, wherein the first condition comprises at least one of the following:
a concatenation timer of the first data set expires;
a concatenation counter of the first data set reaches a count threshold; or
a size of the first data set is greater than or equal to a specific threshold.

5. A computer-readable storage medium, comprising a program or instructions, wherein when the program or the instructions is/are run on a computer, the computer is caused to perform method according to claim 1 or 2.

## Patentansprüche

1. Verfahren zur Datenübertragung, wobei das Verfahren Folgendes umfasst:
Erhalten (S901) eines Zeitspannenschwellenwertes mindestens eines ersten Zeitgebers, wobei der mindestens eine erste Zeitgeber einem ersten Datensatz zugeordnet ist und der erste Datensatz mehrere verkettete Dateneinheiten umfasst, und Verwerfen (S902) des ersten Datensatzes, basierend auf dem Zeitspannenschwellenwert des mindestens einen ersten Zeitgebers, wenn der mindestens eine erste Zeitgeber abläuft,
wobei der mindestens eine erste Zeitgeber, der einem ersten Datensatz zugeordnet ist, Folgendes umfasst: der mindestens eine erste Zeitgeber ist mehrere Verwerfungszeitgeber und jeder der mehreren Verwerfungszeitgeber ist jeweils einer der mehreren verketteten Dateneinheiten zugeordnet, wobei das Verwerfen (S902) des ersten Datensatzes, wenn der mindestens eine erste Zeitgeber abläuft, Folgendes umfasst: Bestimmen, den ersten Datensatz nicht zu verwerfen, wenn die mehreren Verwerfungszeitgeber nicht ablaufen, oder
wobei, dass der mindestens eine erste Zeitgeber einem ersten Datensatz zugeordnet ist, Folgendes umfasst: der mindestens eine erste Zeitgeber ist ein Verwerfungszeitgeber, der einer ersten Dateneinheit zugeordnet ist und die erste Dateneinheit ist eine letzte Dateneinheit in dem ersten Datensatz, und das Verfahren ferner Folgendes umfasst:
Anhalten eines Verwerfungszeitgebers, der einer Dateneinheit zugeordnet ist, die in dem ersten Datensatz vor der zweiten Dateneinheit verkettet ist, wenn eine zweite Dateneinheit in dem ersten Datensatz empfangen wird, oder
wobei, dass der mindestens eine erste Zeitgeber einem ersten Datensatz zugeordnet ist, Folgendes umfasst: der mindestens eine erste Zeitgeber ist ein Verwerfungszeitgeber, und das Verfahren ferner Folgendes umfasst: Anhalten der Verkettung des ersten Datensatzes und Starten des Verwerfungszeitgebers, oder
wobei, dass der mindestens eine erste Zeitgeber einem ersten Datensatz zugeordnet ist, Folgendes umfasst: der mindestens eine erste Zeitgeber ist ein Verwerfungszeitgeber, und das Verfahren ferner Folgendes umfasst: Starten oder Neustarten des Verwerfungszeitgebers, wenn eine dritte Dateneinheit in dem ersten Datensatz empfangen wird, wobei die dritte Dateneinheit eine beliebige Dateneinheit in dem ersten Datensatz ist.

2. Verfahren nach Anspruch 1, wobei das Anhalten der Verkettung des ersten Datensatzes Folgendes umfasst:
Stoppen der Verkettung des ersten Datensatzes, wenn eine erste Bedingung erfüllt ist, wobei die erste Bedingung mindestens eines des Folgenden umfasst:
ein Verkettungszeitgeber des ersten Datensatzes läuft ab,
ein Verkettungszähler des ersten Datensatzes erreicht einen Zählerschwellenwert oder eine Größe des ersten Datensatzes ist größer oder gleich einem spezifischen Schwellenwert.

3. Kommunikationsvorrichtung (1500), Folgendes umfassend:
eine Einheit (1501) zum Erhalten von Informationen, die dafür konfiguriert ist, einen Zeitspannenschwellenwert mindestens eines ersten Zeitgebers zu erhalten, wobei der mindestens eine erste Zeitgeber einem ersten Datensatz zugeordnet ist und der erste Datensatz mehrere verkettete Dateneinheiten umfasst, und
eine Verarbeitungseinheit (1502), die dafür konfiguriert ist, den ersten Datensatz basierend auf dem Zeitspannenschwellenwert des mindestens einen ersten Zeitgebers zu verwerfen, wenn der mindestens eine erste Zeitgeber abläuft,
wobei, dass der mindestens eine erste Zeitgeber einem ersten Datensatz zugeordnet ist, Folgendes umfasst: der mindestens eine erste Zeitgeber ist mehrere Verwerfungszeitgeber und jeder der mehreren Verwerfungszeitgeber ist jeweils einer der mehreren verketteten Dateneinheiten zugeordnet, wobei die Verarbeitungseinheit (1502) für Folgendes konfiguriert ist: Bestimmen, den ersten Datensatz nicht zu verwerfen, wenn die mehreren Verwerfungszeitgeber nicht ablaufen, oder
wobei der mindestens eine erste Zeitgeber ein Verwerfungszeitgeber ist, der einer ersten Dateneinheit zugeordnet ist, und die erste Dateneinheit eine letzte Dateneinheit in dem ersten Datensatz ist, und die Verarbeitungseinheit (1502) ferner für Folgendes konfiguriert ist: Anhalten eines Verwerfungszeitgebers, der einer Dateneinheit zugeordnet ist, die in dem ersten Datensatz vor einer zweiten Dateneinheit verkettet ist, wenn die zweite Dateneinheit in dem ersten Datensatz empfangen wird, oder
wobei, dass der mindestens eine erste Zeitgeber einem ersten Datensatz zugeordnet ist, Folgendes umfasst: der mindestens eine erste Zeitgeber ist ein Verwerfungszeitgeber, und die Verarbeitungseinheit (1502) ferner für Folgendes konfiguriert ist: Anhalten der Verkettung des ersten Datensatzes und Starten des Verwerfungszeitgebers, oder
wobei, dass der mindestens eine erste Zeitgeber einem ersten Datensatz zugeordnet ist, Folgendes umfasst: der mindestens eine erste Zeitgeber ist ein Verwerfungszeitgeber, und die Verarbeitungseinheit (1502) ferner für Folgendes konfiguriert ist: Starten oder Neustarten des Verwerfungszeitgebers, wenn eine dritte Dateneinheit in dem ersten Datensatz empfangen wird, wobei die dritte Dateneinheit eine beliebige Dateneinheit in dem ersten Datensatz ist.

4. Vorrichtung (1500) nach Anspruch 3, wobei die Verarbeitungseinheit (1502) für Folgendes konfiguriert ist:
Stoppen der Verkettung des ersten Datensatzes, wenn eine erste Bedingung erfüllt ist, wobei die erste Bedingung mindestens eines des Folgenden umfasst:
ein Verkettungszeitgeber des ersten Datensatzes läuft ab,
ein Verkettungszähler des ersten Datensatzes erreicht einen Zählerschwellenwert oder eine Größe des ersten Datensatzes ist größer oder gleich einem spezifischen Schwellenwert.

5. Computerlesbares Speichermedium, ein Programm oder Anweisungen umfassend, wobei ein Computer veranlasst wird, das Verfahren nach Anspruch 1 oder 2 durchzuführen, wenn das Programm oder die Anweisungen auf dem Computer abgearbeitet werden.

## Revendications

1. Procédé de transmission de données, le procédé comprenant :
l'obtention (S901) d'un seuil de durée d'au moins un premier temporisateur, l'au moins un premier temporisateur étant associé à un premier ensemble de données, et le premier ensemble de données comprenant une pluralité d'unités de données concaténées ; et
le rejet (S902) du premier ensemble de données sur la base du seuil de durée de l'au moins un premier temporisateur lorsque l'au moins un premier temporisateur expire,
dans lequel le fait que l'au moins un premier temporisateur soit associé à un premier ensemble de données comprend : le fait que l'au moins un premier temporisateur soit une pluralité de temporisateurs de rejet, et que chacun de la pluralité de temporisateurs de rejet soit associé à chacune de la pluralité d'unités de données concaténées, le rejet (S902) du premier ensemble de données lorsque l'au moins un premier temporisateur expire comprenant : lorsque la pluralité de temporisateurs de rejet n'expire pas, la détermination de ne pas rejeter le premier ensemble de données ; ou
dans lequel le fait que l'au moins un premier temporisateur soit associé à un premier ensemble de données comprend : le fait que l'au moins un premier temporisateur soit un temporisateur de rejet associé à une première unité de données, et que la première unité de données soit une dernière unité de données dans le premier ensemble de données ; et le procédé comprend en outre : lorsqu'une deuxième unité de données dans le premier ensemble de données est reçue, l'arrêt d'un temporisateur de rejet associé à une unité de données concaténée dans le premier ensemble de données avant la deuxième unité de données ; ou
dans lequel le fait que l'au moins un premier temporisateur soit associé à un premier ensemble de données comprend : le fait que l'au moins un premier temporisateur soit un temporisateur de rejet ; et le procédé comprend en outre : l'arrêt de la concaténation du premier ensemble de données ; et le démarrage du temporisateur de rejet ; ou
dans lequel le fait que l'au moins un premier temporisateur soit associé à un premier ensemble de données comprend : le fait que l'au moins un premier temporisateur soit un temporisateur de rejet ; et le procédé comprend en outre : lorsqu'une troisième unité de données dans le premier ensemble de données est reçue, le démarrage ou le redémarrage du temporisateur de rejet, la troisième unité de données étant une unité de données quelconque dans le premier ensemble de données.

2. Procédé selon la revendication 1, dans lequel l'arrêt de la concaténation du premier ensemble de données comprend :
lorsqu'une première condition est satisfaite, l'arrêt de la concaténation du premier ensemble de données, la première condition comprenant au moins l'une des conditions suivantes :
l'expiration d'un temporisateur de concaténation du premier ensemble de données ;
l'atteinte d'un seuil de comptage par un compteur de concaténation du premier ensemble de données ; ou
le fait qu'une taille du premier ensemble de données soit supérieure ou égale à un seuil spécifique.

3. Appareil de communication (1500), comprenant :
une unité d'obtention d'informations (1501), configurée pour obtenir un seuil de durée d'au moins un premier temporisateur, l'au moins un premier temporisateur étant associé à un premier ensemble de données, et le premier ensemble de données comprenant une pluralité d'unités de données concaténées ; et
une unité de traitement (1502), configurée pour rejeter le premier ensemble de données sur la base du seuil de durée de l'au moins un premier temporisateur lorsque l'au moins un premier temporisateur expire,
dans lequel le fait que l'au moins un premier temporisateur soit associé à un premier ensemble de données comprend : le fait que l'au moins un premier temporisateur soit une pluralité de temporisateurs de rejet, et que chacun de la pluralité de temporisateurs de rejet soit associé à chacune de la pluralité d'unités de données concaténées, l'unité de traitement (1502) étant configurée pour : lorsque la pluralité de temporisateurs de rejet n'expire pas, déterminer de ne pas rejeter le premier ensemble de données ; ou
dans lequel l'au moins un premier temporisateur est un temporisateur de rejet associé à une première unité de données, et la première unité de données est une dernière unité de données dans le premier ensemble de données ; et l'unité de traitement (1502) est en outre configurée pour : lorsqu'une deuxième unité de données dans le premier ensemble de données est reçue, arrêter un temporisateur de rejet associé à une unité de données concaténée dans le premier ensemble de données avant la deuxième unité de données ; ou
dans lequel le fait que l'au moins un premier temporisateur soit associé à un premier ensemble de données comprend : le fait que l'au moins un premier temporisateur soit un temporisateur de rejet ; et l'unité de traitement (1502) est en outre configurée pour : arrêter la concaténation du premier ensemble de données ; et démarrer le temporisateur de rejet ; ou
dans lequel le fait que l'au moins un premier temporisateur soit associé à un premier ensemble de données comprend : le fait que l'au moins un premier temporisateur soit un temporisateur de rejet ; et l'unité de traitement (1502) est en outre configurée pour : lorsqu'une troisième unité de données dans le premier ensemble de données est reçue, démarrer ou redémarrer le temporisateur de rejet, la troisième unité de données étant une unité de données quelconque dans le premier ensemble de données.

4. Appareil (1500) selon la revendication 3, dans lequel l'unité de traitement (1502) est configurée pour :
lorsqu'une première condition est satisfaite, arrêter la concaténation du premier ensemble de données, la première condition comprenant au moins l'une des conditions suivantes :
l'expiration d'un temporisateur de concaténation du premier ensemble de données ;
l'atteinte d'un seuil de comptage par un compteur de concaténation du premier ensemble de données ; ou
le fait qu'une taille du premier ensemble de données soit supérieure ou égale à un seuil spécifique.

5. Support de stockage lisible par ordinateur, comprenant un programme ou des instructions, de sorte que, lors de l'exécution du programme ou des instructions sur un ordinateur, l'ordinateur est amené à réaliser le procédé selon la revendication 1 ou 2.
